(19) **Europäisches Patentamt**
**European Patent Office**
**Office européen des brevets**

(11) **EP 1 060 772 B1**

(12) **EUROPEAN PATENT SPECIFICATION**

(45) Date of publication and mention
of the grant of the patent:
**01.02.2012 Bulletin 2012/05**

(51) Int Cl.:
*A63F 13/10* (2006.01)   *G06F 3/00* (2006.01)
*A63F 13/00* (2006.01)   *A63F 13/08* (2006.01)
*A63F 13/12* (2006.01)

(21) Application number: **00103876.9**

(22) Date of filing: **24.02.2000**

(54) **Apparatus and method to represent mixed reality space shared by plural operators, game apparatus using mixed reality apparatus and interface method thereof**

Vorrichtung und Verfahren zur Darstellung eines von mehreren Benutzern geteilten Raumes, wo Wirklichkeit zum Teil einbezogen wird, entsprechende Spielvorrichtung und entsprechendes Schnittstellenverfahren

Appareil et méthode de représentation d'un espace incluant des élements réels, partagé par plusieurs utilisateurs, appareil de jeu et méthode d'interface correspondante

(84) Designated Contracting States:
**AT BE CH CY DE DK ES FI FR GB GR IE IT LI LU MC NL PT SE**

(30) Priority: **11.06.1999 JP 16471899**
**11.06.1999 JP 16471999**
**11.06.1999 JP 16570999**

(43) Date of publication of application:
**20.12.2000 Bulletin 2000/51**

(73) Proprietor: **CANON KABUSHIKI KAISHA**
**Tokyo (JP)**

(72) Inventors:
• **Ohshima, Toshikazu,**
**c/o Mixed Reality Systems**
**Nishi-ku,**
**Yokohama-shi,**
**Kanagawa-ken (JP)**
• **Sato, Kiyohide,**
**c/o Mixed Reality Systems**
**Nishi-ku,**
**Yokohama-shi,**
**Kanagawa-ken (JP)**

(74) Representative: **TBK**
**Bavariaring 4-6**
**80336 München (DE)**

(56) References cited:
**EP-A- 0 899 690    US-A- 5 558 619**
**US-A- 5 694 142    US-A- 5 703 604**

• **PATENT ABSTRACTS OF JAPAN vol. 0182, no. 76 (C-1204), 26 May 1994 (1994-05-26) -& JP 06 047170 A (SEGA ENTERP LTD), 22 February 1994 (1994-02-22)**
• **OHSHIMA T ET AL: "AR<2>Hockey: a case study of collaborative augmented reality" VIRTUAL REALITY ANNUAL INTERNATIONAL SYMPOSIUM, 1998. PROCEEDINGS., IEEE 1998 ATLANTA, GA, USA 14-18 MARCH 1998, LOS ALAMITOS, CA, USA,IEEE COMPUT. SOC, US, 14 March 1998 (1998-03-14), pages 268-275, XP010268738 ISBN: 0-8186-8362-7**
• **STATE A ET AL: "SUPERIOR AUGMENTED REALITY REGISTRATION BY INTEGRATING LANDMARK TRACKING AND MAGNETIC TRACKING" COMPUTER GRAPHICS PROCEEDINGS 1996 (SIGGRAPH). NEW ORLEANS, AUG. 4 - 9, 1996, COMPUTER GRAPHICS PROCEEDINGS (SIGGRAPH), NEW YORK, NY : ACM, US, 4 August 1996 (1996-08-04), pages 429-438, XP000682759**
• **"FORE-SCREEN DISPLAY AND MANIPULATION FOR VIRTUAL WORLD INTERACTION" IBM TECHNICAL DISCLOSURE BULLETIN, IBM CORP. NEW YORK, US, vol. 36, no. 3, 1 March 1993 (1993-03-01), pages 45-46, XP000354695 ISSN: 0018-8689**

EP 1 060 772 B1

**Description**

The present invention related to a mixed reality apparatus and mixed reality presentation method, which allow a given operator to easily recognize the state of another operator when a plurality of operators make predetermined operation while sharing a mixed reality space.

The present invention also relates to a pointer display method, with which a pointer display does not disturb other objects even when there are a plurality of persons who make pointing inputs or even in a narrow space, and a pointed point and direction can be easily recognized.

The present invention further relates to a user interface apparatus and method, and a game apparatus, which generate an instruction (or command) by adequately detecting player's (user's) actions in, e.g., an action game played in a mixed reality space.

In recent years, Mixed Reality (MR) that aims at seamlessly coupling a real space and virtual space has been extensively studied. MR has received a lot of attention as a technique which aims at realizing coexistence of a virtual reality (VR) world that can be expressed in only a situation isolated from a real space, and the real space, and augments VR.

A typical apparatus for implementing MR is a head-mounted display (HMD). More specifically, MR is implemented by mixing and displaying real and virtual space on the HMD. MR schemes using the HMD include an optical see-through scheme for superposing a CG image or the like onto an image displayed on a semi-transparent (see-through) HMD, and a video see-through scheme for mixing a CG image or the like onto image data sensed by a video camera attached to an HMD, and then displaying the mixed image on the HMD.

MR can be used, quite possibly, in new fields which are qualitatively quite different from VR, such as a medical assist application for presenting the state inside the body of a patient to a doctor as if it were seen through, a job assist application for superposing and displaying the assembly sequence of a product on real parts in a factory, and the like.

(Game Application)

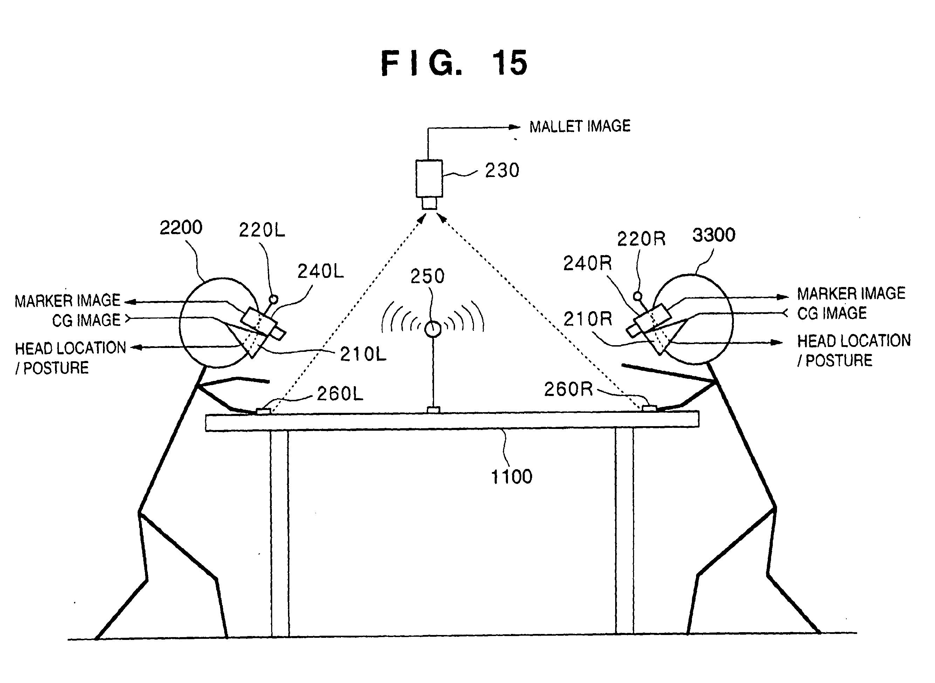

On the other hand, as an example in which a plurality of persons share an identical space and make operations in collaboration with each other using MR, a game disclosed in, e.g., Japanese Patent Laid-Open No. 11-84307 is known. Japanese Patent Laid-Open No. 11-84307 discloses an air hockey apparatus shown in Fig. 15 as a game apparatus using MR.

In an air hockey game, two players normally confront each other via a table, on which a puck floats by compressed air supplied from small holes formed in the table surface. Each player strikes back the puck by manually operating a mallet so as to shoot the puck into the opponent's goal.

In an air hockey game to which MR is applied, a puck is superposed as a virtual object on a real space and is displayed on the players' HMDs to play an air hockey game.

EP 0 889 690 A2 discloses a mixed reality presentation apparatus which comprises respective head mounted displays (HMD) attachable to the head of each player, and real mallets each equipped with an infrared ray generator, so that at least two users (i.e. players) can experience virtual table hockey game. The HMDs are of a see-through type and each comprise a magnetic sensor and a camera. Each position and orientation of each player's HMD are determined through the respective magnetic sensors by detecting changes in a magnetic field generated by a magnetic field generation source. This determination is corrected by the images attained by the respective HMD cameras.

US 5,558,619 discloses an endoscope system including a movement detector for detecting an operator's movement, a signal processor for processing a signal the detector detects, and a control for controlling drive which drives a medical device according to an output signal of the signal processor. The endoscope system includes a superimposing means for superimposing an image associated with the operator's movement onto an image acquired by an imaging device associated with the endoscope system.

The article "AR2 Hockey: A Case Study of Collaborative Augmented Reality" by T. Ohshima et al., Proceedings of the IEEE Virtual Reality Annual International Symposium (VRAIS'98), March 14-18, 1998, Atlanta, USA, pages 268 to 275, introduces a collaborative augmented reality system for realtime, interactive operations, while making multiple participants simultaneously sharing a physical space surrounding them and a virtual space, virtually registered with the physical one.

Fig. 15 is a side view of an MR air hockey game apparatus according to an arrangement of a game apparatus.

In an MR air hockey game, two players 2200 and 3300 confront each other via a table 1100 while holding with their hands control boxes (260L and 260R), which are used as mallets. The two players 2200 and 3300 wear head-mounted displays (to be abbreviated as HMDs hereinafter) 210L and 210R on their heads.

Each control box (260L, 260R) has an infrared ray emitter at its distal end, and its two-dimensional position can be detected by processing an image captured by a CCD camera 230, which is provided above the table and detects infrared rays. If the control box has a specific shape or color, its position can also be detected by pattern recognition using such feature.

The HMD 210 is of, e.g., optical see-through type. The two players can directly observe the surface of the table 1100 even with the HMDs 210L and 210R. A two-dimensional virtual image is input from an image processing system (not shown) to the HMD 210. Hence, the players 2200 and 3300 observe a two-dimensional image displayed on the display screens of the HMDs 210 while being superposed on a real space observed via optical systems (not shown in Fig. 15) of the HMDs 210.

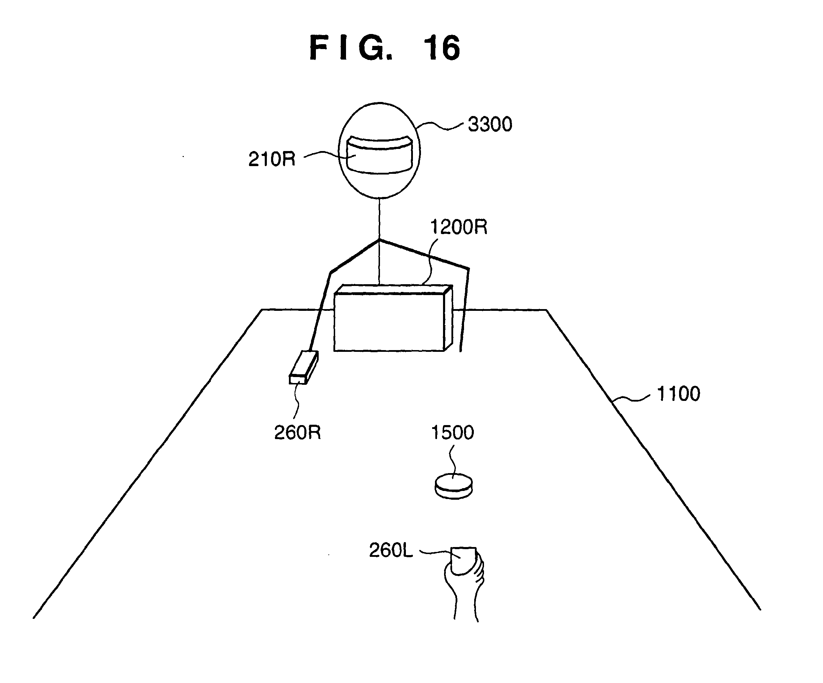

Fig. 16 shows an MR space observed by the left player 2200 via his or her own HMD 210L. Referring to Fig. 16, the opponent player 3300, table 1100, and the own body falling within the field of view, especially, the hand holding the control box, are recognized as real space images. On the other hand, an opponent's goal 1200R and a puck 1500 are displayed in a virtual space.

The two players move the real control boxes held in their hands to hit the virtual puck 1500 displayed by each other's image processing systems. The position of the virtual puck is computed by the image processing systems, and the puck is displayed in the players' HMDs so that it moves on the table while it is hit by the mallets and bounces off surrounding walls.

The HMD 210 each player wears is obtained by attaching a magnetic sensor 220 to an HMD main body disclosed in, e.g., Japanese Patent Laid-Open No. 7-333551 via a column 221. An arrangement in which a magnetic sensor and (or) camera are attached to an HMD can be applied not only to a video see-through HMD but also to an optical see-through HMD for the purpose of accurately detecting the head position and posture.

Each HMD 210 is fixed to the head of the player via a band (not shown). The magnetic sensor (220L, 220R) and a CCD camera 240 (240L, 240R) are fixed to the head of each player. The field of view of the camera 240 is set to observe a space in front of the player. In case of the air hockey game, since each player watches the upper surface of the table 1100, the camera 240 also senses an image of the surface of the table 1100. The magnetic sensor 220 (220L, 220R) senses a change in AC magnetic field generated by an AC magnetic field source 250.

When the player turns his or her face obliquely downward to watch the surface of the table 1100, he or she can see the surface of the table 1100, the aforementioned virtual puck 1500, the real mallet (control box 260), and the virtual goal 1200 (1200L, 1200R) in the field of view via the HMD 210. When the player moves to translate the head in the three-dimensional space or moves the head in a tilt, yaw, or roll direction, such change in head posture is detected by the magnetic sensor 220, and is observed as a change in image sensed by the CCD camera 240 accordingly.

Using the detected change in posture of the head, the display position of image data of the virtual space displayed in the HMD is changed. A marker may be formed on the table, and a signal indicating a change in posture can be corrected based on a marker image sensed by the camera 240.

(Pointer display)

On the other hand, when a predetermined position, object, or the like in an MR space is to be pointed, an image formed by combining planes such as a three-dimensional model image of a pointing rod or a simple rod which is used in a real space, or the like is used as a pointing rod in the MR space.

In the aforementioned MR air hockey game, both the players wear the HMDs, and cannot see each other's visual axis or line-of-sight directions. Also, the players can see devices they wear, resulting in poor reality.

Also, virtual space images (images of virtual objects) to be displayed are only a puck and goals, and their display contents (visual effects) and images change little.

Furthermore, since no information display such as the opponent player's name, records so far, current scores, and the like is made, it is hard to recognize the game state, opponent player level, and the like.

In addition, no processes for sharing an identical mixed reality space by three or more players are suggested.

In the MR space, when a predetermined position or object is pointed, since a model image of a three-dimensional object such as a rod or the like is used, the distance to that image is not easy to recognize. Also, when a plurality of pointing rods are present in a space, the displayed images are confusing. Also, since each rod is formed by planes, the visibility of overlapping portions is poor.

(Command input method)

As for command input or user interface, the players of MR air hockey game apparatus only need to operate the single mallet. However, an ordinary video game apparatus requires operation of input device(s) i.e., keyboard, button (s), mouse and joystick, etc. to input command(s) for playing the game.

A current personal computer system uses as a user interface a pointing device such as a mouse, track pad, or the like. However, the user must hold the mouse and slide it on a given surface. On the other hand, the user must rub against the surface of the track pad with his or her hand. Thus, these pointing devices limit user's actions. A GUI (Graphical User Interface) used in a personal computer and a video game apparatus or the like is that for a two-dimensional space, and is not suitable for that in a three-dimensional space.

For these reasons, it is a common practice in the technical field of VR (Virtual Reality) or AR (Augmented Reality) to input commands to the system by switch operations of an input device which is held by a user's (player's) hand and has switch buttons, and the like.

In the prior art in which commands are input by switch operations on the input device having button switches and the like, the number of types or number of commands (instructions) is limited by the number of buttons. If the number of types or number of commands (or instructions) is increased, the number of buttons increases inevitably. As a result, the input device becomes large in size, and the load on the user (player) becomes heavier as he or she must learn the button positions.

Learning the button positions imposes a heavy load on the user since the command contents do not match the button positions. To put it differently, expressing various command contents (e.g., "forward movement", "backward movement", "stop", and the like) by one operation, i.e., depression of a button (or a switch) is difficult if not impossible.

On the other hand, in the VR (Virtual Reality) or AR (Augmented Reality) field, a device for simulating user's (player's) hand actions has been proposed. For example, in one technique, a sensor for detecting the bent angle of a joint of a finger is attached to a hand of the user, and a CG (computer graphic) image is generated in correspondence with the bent angle of the finger detected by that sensor. However, this technique aims at simulating hand actions of the user, and it is impossible to apply this technique to that for recognizing the user (player) instructions (or commands) in practice.

In this technique, for example, when the user stretches the arm forward, a CG image with the arm stretched forward is generated, and display of such image can be interpreted to be a result of a user instruction or forward stretching of the arm in the broad sense. However, if user commands are generated by only hand actions, every hand actions are unwantedly interpreted as commands, and such interface has poor reliability.

It is an object of the present invention to provide a mixed reality apparatus and mixed reality space image display method, which can solve the aforementioned problems and can assure reality even when two players share a MR space.

According to the invention, a mixed reality apparatus and mixed reality representing method as set forth in the claims are provided. Any unclaimed embodiments do not form part of the current invention.

Further developments are as set out in the respective dependent claims.

It is another object of the present invention to provide a mixed reality apparatus and mixed reality space image display method, which allow a given player to easily identify the visual axis direction of another player.

It is still another object of the present invention to provide a mixed reality apparatus and mixed reality space image display method, which change display contents in correspondence with the state of each player, input commands, and the like.

More specifically, the gist of the present invention lies in a mixed reality apparatus for allowing a player to experience mixed reality by making the player visually confirm a mixed reality space obtained by mixing a real space and virtual space.

Still another gist of the present invention lies in a mixed reality presentation method for allowing a player to experience mixed reality by making the player visually confirm a mixed reality space obtained by mixing a real space and virtual space.

Still another gist of the present invention lies in a storage medium which stores a mixed reality presentation program for allowing a player to experience mixed reality by making the player visually confirm a mixed reality space obtained by mixing a real space and virtual space.

According to the present invention, when the user (player) expresses his or her intention or instruction by his or her own action, he or she often expresses it by a combination of actions of a plurality of his or her body portions. Such combination of actions can be estimated by detecting the position of the second portion relative to the first portion.

The user or player normally expresses an action by a relative location with respect to his or her field-of-view direction. The field-of-view direction is roughly determined by the head location. Hence, according to the present invention, the first portion is a head.

According to the present invention, the second portion is a hand. This is because it is easiest for the user to express an action by hand.

User's (player's) action is preferably recognized as a state change. Hence, according to the present invention, information which pertains to a state change of the second portion with respect to a position of the first portion, and information which pertains to a position change velocity of the state change are detected.

According to the present invention, information which pertains to a state change of the second portion with respect to a position of the first portion, and information which pertains to a position change acceleration of the state change are detected.

According to the present invention, information which pertains to an orientation of the second portion with respect to an orientation of the first portion is detected.

According to the present invention, information which pertains to a moving direction of a position of the second portion with respect to an orientation of the first portion is detected.

A user instruction or command is composed of a plurality of portions in practice, and it is advantageous for a program to individually execute those portions of the instruction or command.

When the present invention is applied to the game apparatus, a display device is preferably used. Hence, the game apparatus comprises display means for displaying an image of a game scene in front of the head of the player for the player. Furthermore, the display means is preferably a head-mounted display.

Other features and advantages of the present invention will be apparent from the following visually confirm a mixed reality space obtained by mixing a real space and virtual space, comprising: the detection step of detecting a location/posture of a predetermined portion of the player; and the virtual space image generation step of rendering a virtual object to be superposed on the predetermined portion on the basis of the location/posture of the predetermined portion detected in the detection step, and generating a virtual space image.

Still another gist of the present invention lies in a mixed reality presentation method comprising: the player processing step for each player, and which includes the location information detection step of detecting location information of a player, the action detection step of detecting a predetermined action of the player, the image generation step of generating a mixed reality space on the basis of information that pertains to another player, information that pertains to a real space, and information required for generating a virtual space image, and the display step of making the player visually recognize the mixed reality space; and the control step which has the step of managing and controlling the mixed reality space, and distributes player information including the location information and predetermined action detection information detected in the player processing step, information that is registered in advance and pertains to the real space, and information required for generating the virtual space image to at least the player processing step other than the player processing step as a source of the player information.

Still another gist of the present invention lies in a storage medium which stores a mixed reality presentation program for allowing a player to experience mixed reality by making the player visually confirm a mixed reality space obtained by mixing a real space and virtual space, having: the detection program step of detecting a location/posture of a predetermined portion of the player; and the virtual space image generation program step of rendering a virtual object to be superposed on the predetermined portion on the basis of the location/posture of the predetermined portion detected in the detection step, and generating a virtual space image.

Still another gist of the present invention lies in a storage medium storing at least one of: a player processing program for each player, and which includes the location information detection program step of detecting location information of a player, the action detection program step of detecting a predetermined action of the player, the image generation program step of generating a mixed reality space on the basis of information that pertains to another player, information that pertains to a real space, and information required for generating a virtual space image, and the display program step of making the player visually recognize the mixed reality space; and a control program which has the program step of managing and controlling the mixed reality space, and distributes player information including the location information and predetermined action detection information detected in the player processing program step, information that is registered in advance and pertains to the real space, and information required for generating the virtual space image to at least the player processing program step other than the player processing program step as a source of the player information.

Still another gist of the present invention lies in a pointer display for pointing an arbitrary location in a mixed reality space expressed by mixing a real space and virtual space, wherein the pointer display in a mixed reality space is made up of not less than n (n is an integer not less than 2) parallel lines in a virtual space.

Still another gist of the present invention lies in a pointer display method for making a pointer display that points an arbitrary location in a mixed reality space expressed by mixing a real space and virtual space, wherein the pointer display is made by a virtual object which is made up of not less than n (n is an integer not less than 2) parallel lines having substantially the same lengths.

Still another gist of the present invention lies in a mixed reality apparatus using a pointer display of the present invention.

Still another gist of the present invention lies in a storage medium which stores a pointer display method of the present invention as a program which can be executed by a computer.

Still another gist of the present invention lies in a mixed reality apparatus using a pointer display method of the present invention.

Still another gist of the present invention lies in a user interface apparatus comprises:

a first sensor attached to a first portion of a body of a user;
a second sensor attached to a second portion different from the first portion;
means for generating action information of the second portion on the basis of a relative position of the second portion with respect to the first portion, which is detected by the first and second sensors; and

determination means for determining a user instruction corresponding to the generated action information.

Also, a game apparatus according to the present invention comprises:

a first sensor for detecting a location/posture of a head of a player;
a second sensor for detecting a location/posture of a hand or arm;
means for estimating an action of the player on the basis of a relative location/posture of the hand or arm with respect to the location/posture of the head, which are detected by the first and second sensors; and
means for outputting a player command corresponding to the estimated action.

Likewise, according to the present invention, a user interface method for outputting a user instruction to a predetermined apparatus or program, comprises:

the step of detecting a location of a first portion of a body of a user and a location of a second portion different from the first portion using first and second sensors attached to the user; and
the step of determining a user instruction on the basis of a relative position of the second portion with respect to the first portion, which are detected by the first and second sensors, and outputting the determined user instruction to the apparatus or program.

In these inventions, when the user (player) expresses his or her intention or instruction by his or her own action, he or she often expresses it by a combination of actions of a plurality of his or her body portions. Such combination of actions can be estimated by detecting the location of the second portion relative to the first portion, as described above.
The user or player normally expresses an action by a relative location with respect to his or her field-of-view direction. The field-of-view direction is roughly determined by the head location. Hence, according to a preferred aspect of the present invention, the first portion is a head.
According to a preferred aspect of the present invention, the second portion is a hand. This is because it is easiest for the user to express an action by hand.
According to a preferred aspect of the present invention, the first (second) sensor detects a location or location/ posture of the first (second portion.
User's (player's) action is preferably recognized as a state change. Hence, according to a preferred aspect of the present invention, information which pertains to a state change of the second portion with respect to a location of the first portion, and information which pertains to a location change velocity of the state change are detected.
According to a preferred aspect of the present invention, information which pertains to a state change of the second portion with respect to a location of the first portion, and information which pertains to a location change acceleration of the state change are detected.
According to a preferred aspect of the present invention, information which pertains to a posture of the second portion with respect to a posture of the first portion is detected.
According to a preferred aspect of the present invention, information which pertains to a moving direction of a location of the second portion with respect to a posture of the first portion is detected.
Various methods of analyzing an action state are available. According to claim 10 or 25 as a preferred aspect of the present invention, a value of the relative position of the second portion with respect to the first portion, a plurality of state values which are defined in advance as a result of transition of the value, and a plurality of different user instruction values corresponding to the plurality of state values are stored.
A user instruction or command is composed of a plurality of portions in practice, and it is advantageous for a program to individually execute those portions of the instruction or command. Hence, according to a preferred aspect of the presnt9 invention, the determined user instruction or command is decomposed into a plurality of instruction operands, and the operands are output.
According to another preferred aspect of the present invention, when it is determined that a relative relationship between a location/posture of a head detected by the first sensor, and a location/posture of a hand detected by the second sensor indicates an action of the user whose line of sight is pointing to a predetermined portion of the hand, a user instruction for outputting an operation guidance (so-called on-line HELP) is generated.
According to a preferred aspect of the present invention, a third sensor for detecting a bent angle of a finger is further used.
When the present invention is applied to the game apparatus, a display device is preferably used. Hence, the game apparatus according to a preferred aspect of the present invention comprises display means for displaying an image of a game scene in front of the head of the player for the player. Furthermore, the display means is preferably a head-mounted display.
When the present invention is applied to the game apparatus, three steps including preparation, execution, and return steps, are preferably prepared for the player command. According to a preferred aspect of the present invention, the steps are respectively defined as:

a preparation action step for the first player command when the location of the hand of the player moves to a position behind a position in front of a face of the player;
an execution step for the first player command when the location of the hand moves forward from a rear position after the preparation action; and
a return action step for the first player command when the location of the hand returns to a position of the face of the player after the forward movement.

Note that the above object can also be achieved by a program storage medium that stores a computer program for implementing the aforementioned user interface method.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a block diagram showing an example of the arrangement of an MR apparatus according to the present invention;
Fig. 2 is a view for explaining the types and locations of devices the player wears;
Figs. 3A and 3B are views for explaining a game in an embodiment of the present invention;
Fig. 4 is a flow chart for explaining a shooting display process by means of command inputs;
Fig. 5 shows an example of a virtual object superposed on the whole body of the player;
Figs. 6A to 6C are views for explaining changes in displayed image in response to command input by an interactive input device;
Fig. 7 shows an example of changes in displayed image in accordance with player's choice;
Figs. 8A to 8D show an example of changes in displayed image in correspondence with the visual axis direction of another player;
Fig. 9 is a view for explaining an example of a condition upon implementing the changes in display shown in Figs. 8A to 8D;
Fig. 10 is a flow chart showing the display process according to the condition shown in Fig. 9;
Figs. 11A and 11B are views for explaining a pointer display method according to the present invention;
Figs. 12A to 12C are views for explaining changes the way an object looks in correspondence the display start point when the pointer display method of the present invention is used;
Fig. 13 shows an example for making the user recognize the presence of an object more clearly using the pointer display method of the present invention;
Fig. 14 is a view showing another example of a pointer display method of the present invention;
Fig. 15 is a view for explaining a hockey game exploiting conventional MR; and
Fig. 16 is a view for explaining a hockey game exploiting conventional MR.
Fig. 17 is a view for explaining the layout of sensors attached to a player who joins in a game system according to an embodiment of the present invention;
Fig. 18 is a block diagram for explaining the arrangement of the game system according to the embodiment of the present invention;
Fig. 19 is a view for explaining the relationship between the head and hand coordinate systems when viewed from a reference coordinate system as the center;
Fig. 20 is a view for explaining the relationship between the head and hand coordinate system when viewed from the head coordinate system as the center;
Fig. 21 is a view for explaining setups of a coordinate system of a head sensor 150 according to the scheme shown in Fig. 20;
Fig. 22 is a view for explaining setups of a coordinate system of a hand sensor 151 according to the scheme shown in Fig. 20;
Fig. 23 is a block diagram for functionally explaining the arrangement of a command generation unit 2000;
Fig. 24 is a flow chart for explaining the overall sequence of an action analysis section 2002;
Fig. 25 is a view for explaining state transition in the game system according to the embodiment of the present invention;

Fig. 26 is a flow chart for explaining details of step S5 in Fig. 24;
Fig. 27 is a flow chart for explaining details of step S100 in Fig. 26;
Fig. 28 is a flow chart for explaining details of step S200 in Fig. 26;
Fig. 29 is a flow chart for explaining details of step S300 in Fig. 26;
Fig. 30 is a flow chart for explaining details of step S400 in Fig. 26;
Fig. 31 is a flow chart for explaining details of step S500 in Fig. 26;
Fig. 32 shows a state example upon outputting a "loading state";
Fig. 33 shows a state example upon outputting a "defense state"; and
Fig. 34 shows a state example upon outputting a "firing state".

DETAILED DESCRIPTION OF THE PREFERRED EMBODIMENTS

A preferred embodiment of the present invention will be described hereinafter with reference to the accompanying drawings. This embodiment will exemplify a game in which three players play while sharing an identical virtual space. However, an MR apparatus according to the present invention can be applied to other arbitrary applications.

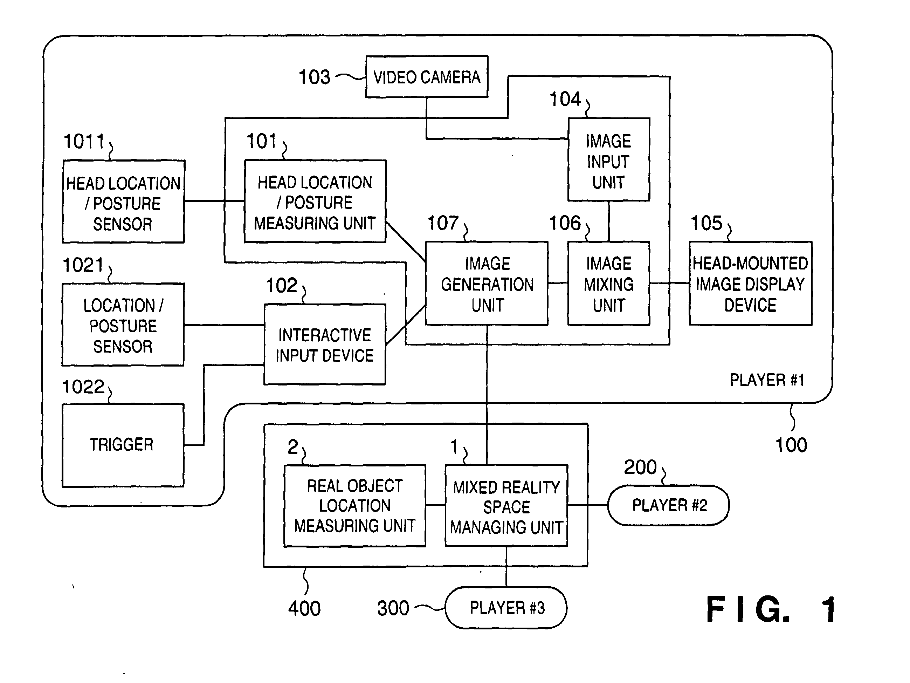

Fig. 1 is a block diagram showing the arrangement of an MR apparatus according to the present invention. Fig. 1 shows the arrangement used when the number of players is three. The MR apparatus comprises player processors 100 to 300 provided in units of players, and a controller 400 connected to the player processors. The number of player processors connected to the controller 400 increases with increasing number of players.

The player processors 100 to 300 have an identical arrangement. That is, each player processor comprises I/O blocks (102, 103, 105, 1011, 1021, 1022) such as sensors, display device, and the like attached to the player's body, and circuit blocks (101, 104, 106, 107) for processing signals captured from the sensors, and generating an image to be displayed on the display device on the basis of the signal processing results and information of other players supplied from the controller.

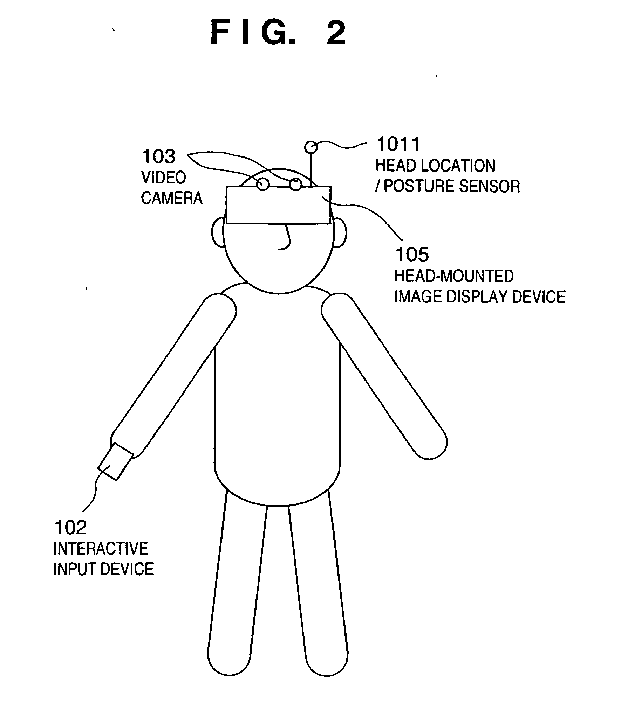

The arrangement of the player processor will be explained below with reference to Fig. 1 and Fig. 2 that shows the types and locations of I/O devices each player wears in this embodiment.

As shown in Fig. 2, each player wears on his or her head a head-mounted image display device (to be referred to as an HMD hereinafter) 105 as a display device for mixing and displaying real and virtual spaces. In this embodiment, the HMD can be either a video or optical see-through type. In the following description, a case using the video see-through HMD will be explained.

Two small video cameras 103 are provided to portions of the HMD 105, that are near player's eyes. Video data sensed by these video cameras at nearly the same view point as that of the player are supplied to an image mixing unit 106 (to be described later) via an image input unit 104, and are displayed on the HMD 105 of the player after being superimposed on virtual space images (images of a virtual objects).

A head location/posture sensor 1011 comprising, e.g., a magnetic sensor, is attached to the head of the player. The magnetic sensors output electrical signals including information of a three-dimensional location (x, y, z) and posture (roll, pitch, yaw) of the portions where they are attached. The sensor 1011 can be attached to the player by using the HMD 105. The output signal from the head location/posture sensor 1011 is processed by a head location/posture measuring unit 101 to obtain information of the head location and posture (tilt direction and amount) of the player.

On the other hand, an interactive input device 102 is attached to a player's arm. The interactive input device 102 has a location/posture sensor 1021 (e.g., the magnetic sensor) for detecting the location and posture of a portion where the device 102 is attached, and a switch (trigger) 1022 that the player can turn on/off, and is used by the player to input commands by making predetermined actions.

In the following description, a case will be exemplified below wherein a plurality of players (three players in this embodiment) share an identical MR space, play a game for defeating enemies while ducking attacks of enemies appearing in the MR space and competing with other players for the number of enemies he or she shoots down or score until the time or damage by enemy attacks reaches a given level, and can input the following commands using the interactive input device 102.

Command 1 (Sight Command)

A command for displaying a line of sight indicating the sight position in the virtual space. This command is input by locating the wrist above the elbow with the back of the hand facing up.

Command 2 (Shooting Command)

A command for shooting the sight position indicated by the line of sight. This command is input by reciprocally moving the arm (from the elbow to the palm) back and forth at a given acceleration or higher while the line of sight is displayed by the sight command.

Command 3 (Defense Command)

A command for defending against an enemy's attack. This command is input by directing the fingertips upward with the back of the hand facing the enemy.

Command 4 (Reset Command)

A command for re-inputting the sight command after the shooting command is input. This command is input by having the arm hanging down.

More specifically, as routine actions in the game of this embodiment, the player repeats command inputs in a cycle of the sight command → shooting command → reset command → sight command, and inputs the defense command as needed in this cycle.

The command input by the interactive input device 102 is supplied to an image generation unit 107.

The image generation unit 107 transfers the head location/posture information of the player supplied from the head location/posture measuring unit 101 and command information supplied from the interactive input device 102 to the controller 400. Also, the unit 107 generates a virtual space image(s) (an image(s) of virtual object(s)) to be displayed on the HMD 105 of the corresponding player using the head location/posture information and command information of that player, and the head location/posture information, command information, and model information of other players, the location, moving direction, and state information of enemy characters, and information of the locations, shapes, and the like of obstacles laid out in the space, which are received from the controller 400, and outputs the generated image to the image mixing unit 106.

The image mixing unit 106 mixes the image (real space image) captured by the video cameras 103 attached at the positions near the view point of the player, and the virtual space image generated by the image generation unit 107, and supplies the mixed image to the HMD 105 of the player.

The controller 400 comprises an MR space managing unit 1 to which the aforementioned player processors 100 to 300 are connected, and a real object location measuring unit 2. The MR space managing unit 1 distributes information that pertains to the head locations and postures of the players, and the locations, postures, and commands of the interactive input devices 102, which are received from the player processors 100 to 300, and executes game processes such as appearance/disappearance control of enemy characters to be displayed in the virtual space, scoring of shooting input by the shooting command, and the like. Information that pertains to the models, locations, moving directions, and states (e.g., defeated or not) of enemy characters are distributed to all the users connected together with each player information.

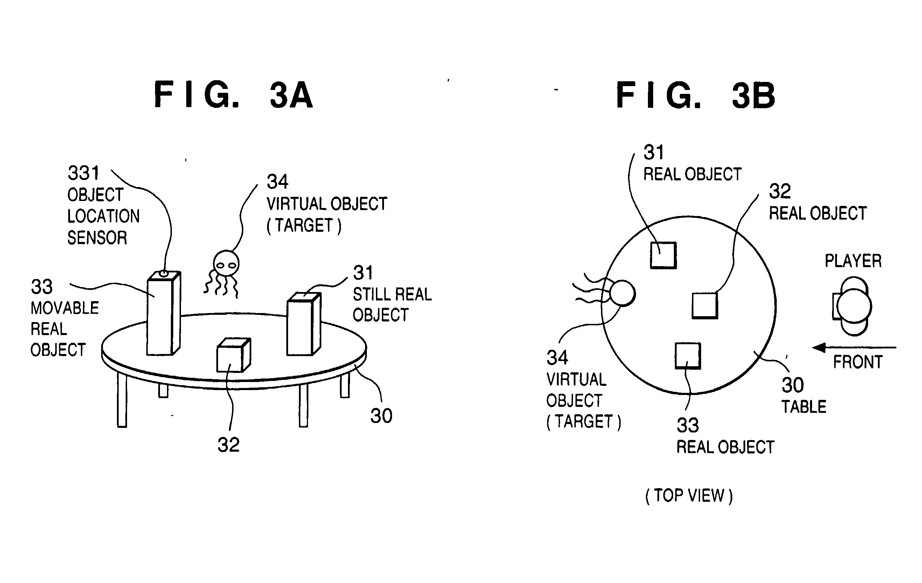

When real objects 31 to 33 are laid out as obstacles to shooting to adjust the game difficulty level, as shown in Figs. 3A and 3B, the MR space managing unit 1 also manages information that pertains to the shapes and locations of these real objects 31 to 33.

Fig. 3A is a perspective view of a game field (MR space) viewed from a certain player, and Fig. 3B is a top view of the game field. Figs. 3A and 3B show a case wherein three real space objects 31 to 33 are laid out as obstacles on a table 30 (in the real space). In this embodiment, since the sight command is input by raising the wrist above the elbow using the interactive input device 102, as described above, the real space objects are laid out on the table 30 which is as high as the waist level of a standard body. However, the need for the table can be obviated depending on command input actions using the interactive input device.

In Figs. 3A and 3B, the real space objects 31 and 32 are fixed in position, and the object 33 is movable. If a movable real space object is provided, the game difficulty level can be dynamically changed. For example, when the movable real object 33 moves to the right and left at a random speed, it is more difficult for a player to shoot an enemy character as a target than a case wherein only the still real objects 31 and 32 are laid out. The movement of the movable real object may be controlled by either the MR space managing unit 1 or another control circuit. In this case, the model of the movable object is managed by the MR space managing unit 1, and its location is obtained by measuring an object location sensor 331 provided to that movable object 33 by the real object location measuring unit 2.

The aforementioned MR apparatus can be implemented by a client-server system which includes the controller 400 as a server, and (the circuit sections of) the player processors 100 to 300 as clients. Since processes that pertain to each player are distributed to and executed by each client, the apparatus can flexibly cope with an increase/decrease in the number of players. More specifically, the player processor can be implemented by a versatile computer having a video I/O function and a signal reception function from various sensors, and the controller 400 can be implemented by a versatile computer having an interface that can communicate with each player processor, and a measurement signal reception function from the object location measuring unit 2.

However, since computations pertaining to three-dimensional image display must be done in real time, a relatively fast computer having an accelerator dedicated to such computations (so-called 3D accelerator) or the like is preferably used. Also, the controller 400 and player processors 100 to 300 are preferably connected via communication lines having a large capacity such as 100BASE-T. If the communication line has a small capacity, the processing speed drops larger with increasing number of players.

(Display by Command Input)

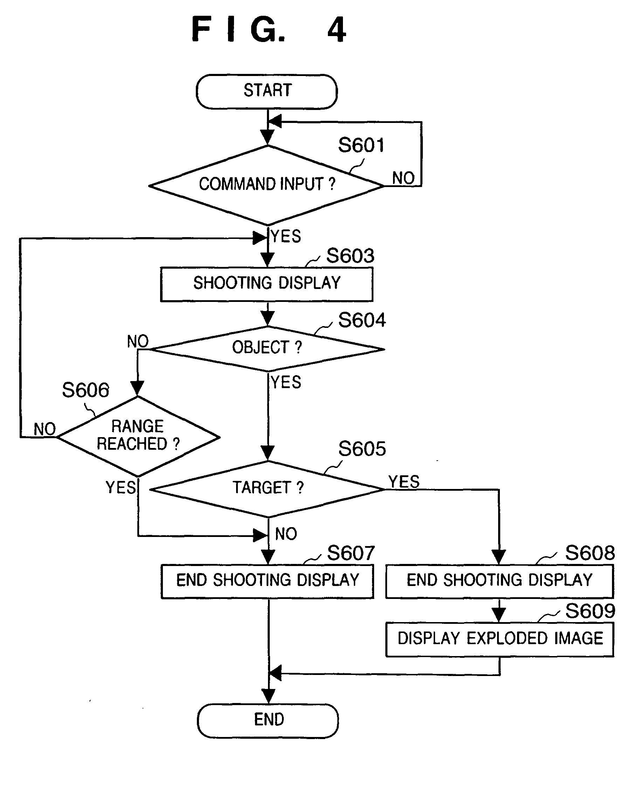

Display operation in response to a command input by the interactive input device will be explained below with reference to Fig. 4. Fig. 4 is a flow chart showing the display process executed upon inputting the shooting command.

It is checked if a shooting command is input (step S601). If a shooting command is input, a shooting display process is started (step S603).

It is checked if an object is present in the shooting direction (step S604). If no object is present, the display process is proceeded until a predetermined range is reached (step S606). After an elapse of a predetermined period of time, display is turned off to end the shooting display process (step S607). On the other hand, if an object is present within the range, it is detected if the object is a target (step S605). If the object is a target, the shooting display process ends (step S608), and the display pattern of the target is changed or deformed to, e.g., an exploded pattern so that the player can recognize whether or not he or she shot down the enemy (step S609). On the other hand, if an object other than the target is present within the range, since it obstructs the trajectory, the shooting display process ends (step S607). If the player shoots an object other than the target, a game presentation message "miss" or the like may be displayed.

Whether or not an object is present on the trajectory of shooting, and the location, type, and the like of the object if it is present may be detected before the shooting display process, and display may be made based on the detection results.

(Display Superposed on Player)

The MR apparatus of the present invention is characterized by displaying a virtual space image superposed on the player, and capable of dynamically changing the display contents of that image in accordance with pertinent conditions.

In the MR apparatus, the player must wear a display device such as an HMD or the like to visually confirm a mixed one of the virtual and real spaces. Furthermore, sensors, a switch, and the like which are used to detect player actions are attached to the player to make some action in the MR space. For example, in the game of this embodiment, an HMD or the like is attached to the head, and an interactive input device on an arm. Such devices which are attached to the player (attached devices) are negligible if there is only one player. However, if there are a plurality of players, one player can see the attached devices of another player. For this reason, especially in an application such as a game, the attached devices may often result in poor reality and disturb empathy of the player into the game.

For this reason, the present invention hides and covers at least the attached devices of the player with the virtual space image, thus realizing an entertaining application. Since the virtual space image to be displayed has contents suitable for an application, empathy of the player is promoted, and a novel presentation effect can be added by dynamically changing the displayed image.

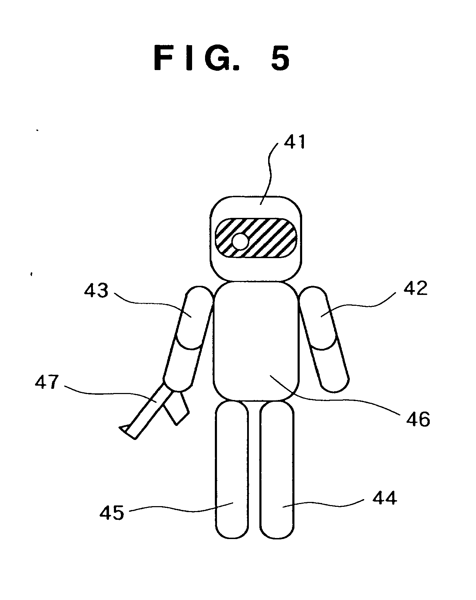

Fig. 5 shows a display example when the virtual space image is superposed on the whole body of the player. A virtual helmet 41 is superposed on the head of the player, and virtual parts 42 to 46 are respectively superposed on the arms, legs, and body. In case of such superpose display, when the player is managed as a model approximated by simple shapes such as columns, rectangular parallelopiped, and the like, the processing loads on the player processor and MR space managing unit can be reduced, and such model can be commonly used for players with different figures. When only the attached devices of the player need be hidden, virtual images can be superposed on only corresponding portions. That is, in case of this embodiment, only the virtual helmet 41 for hiding the HMD and the virtual part 42 or 43 for hiding the interactive input device attached on the right or left arm can be displayed.

Such display control can be implemented by generating images by rendering virtual objects to be superposed using the location/posture information detected by the head location/posture sensor 1011 of another player or the location/posture sensor 1021 provided to the interactive input device, and the aforementioned player model.

As a virtual object to be superposed on the arm to which the interactive input device is attached, an object that simply covers the arm portion may be used. Instead, when an object that represents a function in the game is used, an extra effect can be obtained in addition to hiding of the attached devices. More specifically, when a virtual object that hides the interactive input device includes an object such as a weapon or the like used in the game (or the attached device is hidden by an object such as a weapon or the like), the player can easily confirm a weapon which is currently in use by watching his or her arm especially when he or she can select one of a plurality of types of weapons, and can determine the weapon another player has selected.

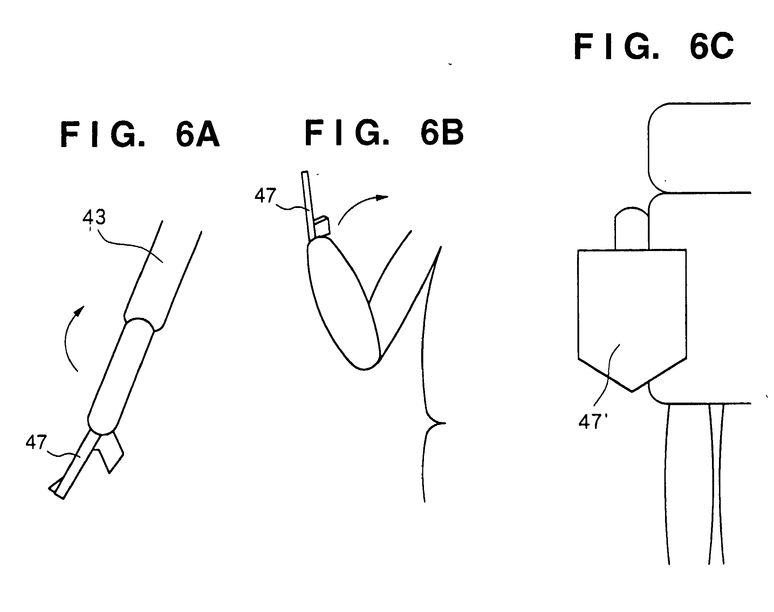

Also, the virtual object to be displayed can be changed or deformed in response to a command input by the interactive input device. Figs. 6A to 6C show an example in which a virtual object changes from a weapon to a shield when the aforementioned defense command is input. More specifically, in the state shown in Fig. 6A that shows a reset command input action, when the player makes a defense command input action, i.e., directs the fingertips upward with the back of the hand facing outside so as to prepare for an attack from an enemy or an oncoming enemy (Fig. 6B), display of a weapon 47 disappears, and a virtual object including a shield 47' is displayed instead (Fig. 6C).

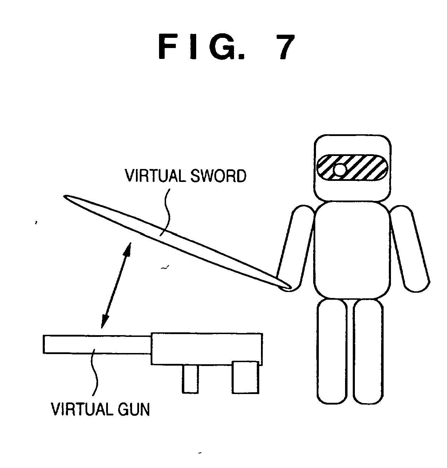

Figs. 6A to 6C show a case wherein the player who input the defense command is viewed from another player. The player himself or herself who input the defense command looks the virtual object including the shield 47' from the back side, and can experience the feeling as if he or she were defending using a shield in practice. Fig. 7 shows a display example in which a virtual object to be displayed changes depending on the type of weapon (sword and gun) the player selected.

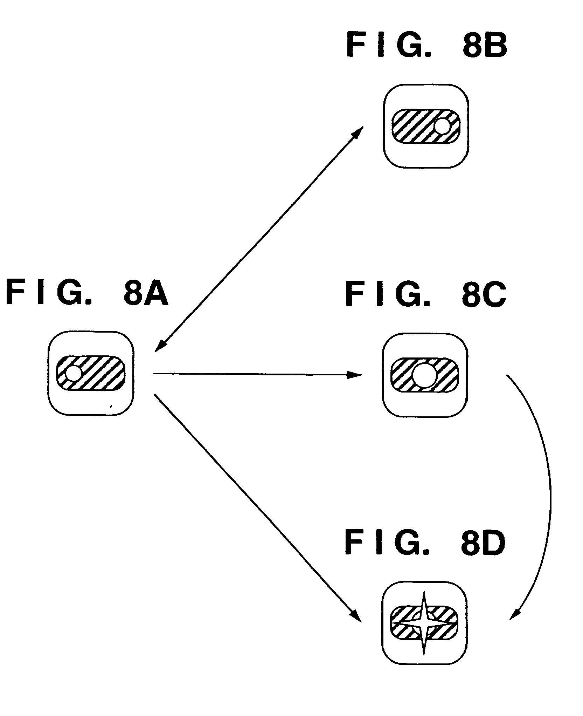

As conditions for changing the display contents, not only an active game action of the player, i.e., the command input, but also the location information of a location change input unit due to movement or the like of the player can be used. Figs. 8A to 8D show an example in which display is changed using the visual axis information of the player.

In the example shown in Figs. 8A to 8D, the position and size of a virtual eye displayed within the virtual helmet, and a visual effect are changed. More specifically, the virtual eye may move (Figs. 8A and 8B) in accordance with the visual axis direction of the player. Using such changes in display, the player can recognize the direction in which another player is gazing. Alternatively, the display size of the virtual eye may be increased as the visual axis direction of the player becomes closer to that of another player (Fig. 8C), or the display luminance of the virtual eye may be increased or the virtual eye may be flickered (Fig. 8D) when the visual axis direction agrees with that of another player. Using such changes in display, a given player can recognize the player who is watching that player. In a game in which a player set his or her sight on a target like in this embodiment, since the visual axis direction is normally close to the line-of-sight direction, the visual axis information is useful upon planning the game strategy.

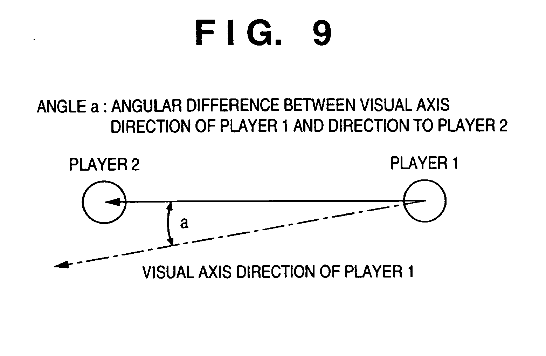

In order to implement such changes in display, for example, as shown in Fig. 9, deviation angle a between the direction of player 1 with respect to player 2 and the visual axis direction is computed from location information of the individual players and visual axis information of player 1, and display is changed in correspondence with changes in angle a.

In general, since the player watches the line-of-sight direction, display control shown in Figs. 8A to 8D may be done on the basis of information of the direction in which the sight is set by the interactive input device.

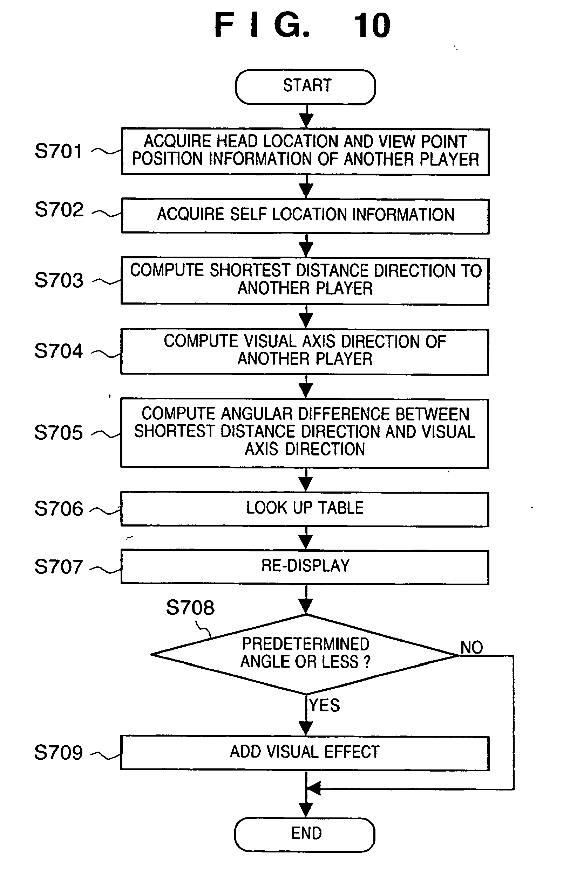

An example of display control will be explained below with reference to Fig. 10. Fig. 10 is a flow chart showing the processes executed when display changes in the order of Fig. 8A → Fig. 8C → Fig. 8D on the basis of the condition shown in Fig. 9 using the visual axis information and location information.

The head location/posture information and view point position information of another player (player 1 in Fig. 9) and oneself (player 2 in Fig. 9) are acquired (steps S701 and S702). A direction that minimizes the distance to the other player is computed (step S703).

The visual axis direction of the other player is computed (step S704), and the angular difference (angle a in Fig. 9) from the direction computed in step S703 is obtained (step S705). This angular difference is compared with a table which is pre-stored in the image generation unit 107, and stores the correspondence between the angular difference and the virtual eye size to acquire the virtual eye size (step S706).

After the virtual eye size is acquired, the size of the superposed virtual eye is updated, and the virtual eye is displayed again (step S707). It is checked if the angular difference is equal to or smaller than a predetermined value (step S708). If the angular difference is equal to or smaller than the predetermined value, a visual effect shown in Fig. 8D is additionally displayed (step S709).

The virtual objects and player model to be superposed are managed by the MR space managing unit 1. Each virtual object model is a three-dimensional model, and the way the model looks changes depending on the view point position. That is, when a given player watches a player who turns his or her face sideways, that player can see the side surface of the virtual helmet.

(Pointer Display)

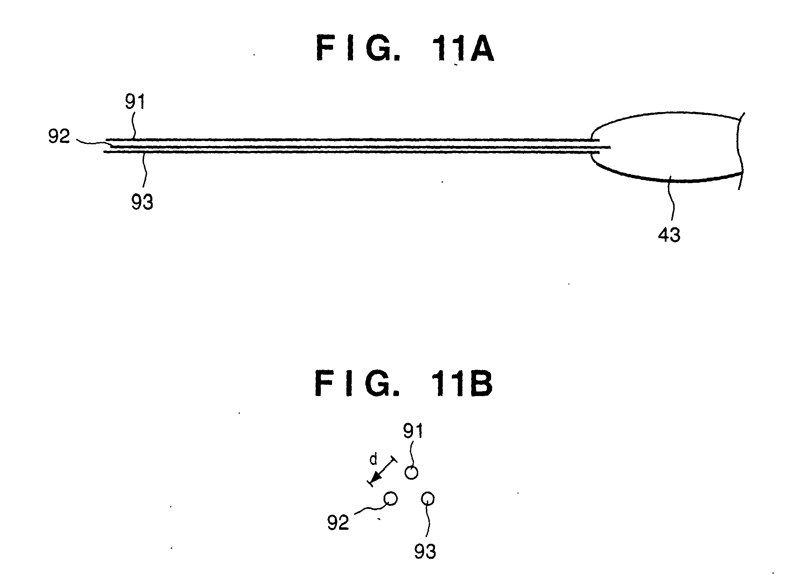

Figs. 11A and 11B show an example of a pointer display for setting the sight. When one point in the space shared by a plurality of players must be pointed, the pointed point must be clearly recognized by not only the player who is pointing but also other players. Furthermore, when a pointer display is large or thick, contents displayed in the field of view are complicated very much and may disturb progress of the game. Also, since one point in the space is pointed, it is not easy to recognize the distance to that point.

In the present invention, a pointer display is made using a plurality of parallel lines laid out at equal intervals. Fig. 11A shows a case wherein a pointer display uses three parallel lines 91 to 93 with a predetermined length to have as a start point a distal end portion of the virtual part 43 which is displayed to hide the interactive input device attached to the player. The parallel lines 91 to 93 are laid out to pass through the vertices of a regular triangle when viewed from the front side, as shown in Fig. 11B. Spacing d between neighboring parallel lines 91 to 93 can be appropriately determined in accordance with the area of the space that can be pointed, but requires approximately several cm (around 3 to 5 cm) to make the pointing direction clear, as will be described later.

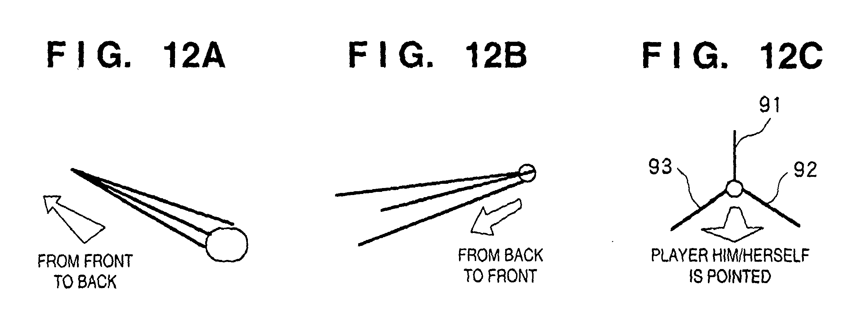

By making such pointer display, a portion (irrespective of whether it is in a virtual or real space) that overlaps the pointer display is not hidden by the pointer display, and the distance to the pointed point and the pointed direction can be recognized more easily. More specifically, as shown in Figs. 12A to 12C, the player who is pointing can see the pointer display, as shown in Fig. 12A, and can easily recognize the pointed point in the space. By contrast, since a player who is located at a position nearly in front of the player who is pointing can see the pointer display, as shown in Fig. 12B, he or she can recognize that a pointer display is made toward his or her side. Also, since the pointer display can be seen from a position directly opposite thereto, as shown in Fig. 12C, a target player can recognize it in a game application in which a sight is set on an opponent player using the pointer display.

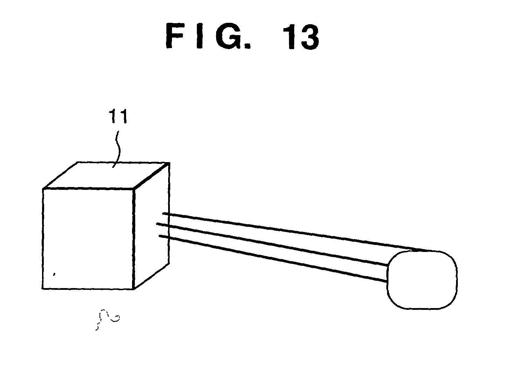

The pointer display can be used not only to point one point in a space but also to make the presence of an object clearer. In Fig. 13, since the lines of the pointer display are displayed to contact positions to an object 11 (which can be either a virtual object or an object placed in the real space), the player can recognize the presence of the object there.

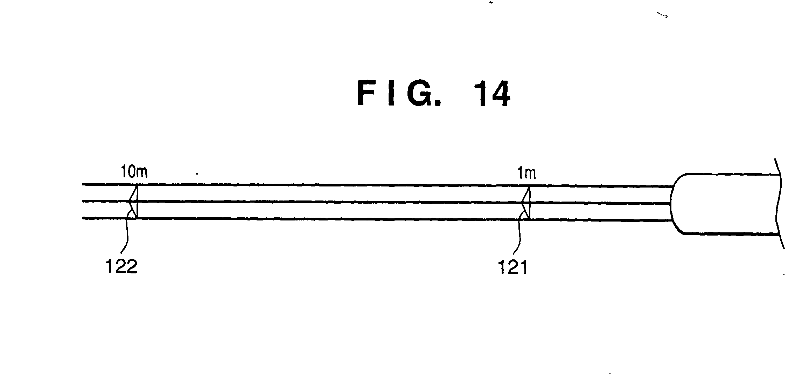

Also, as shown in Fig. 14, when scale marks 121 and 122 are added at equal intervals to the lines of the pointer display, the distance can be recognized more clearly. In this case, the scale marks need not be set at equal intervals but logarithmic scale marks may be used.

In the above embodiment, the apparatus has no physical feedback means for the player. For example, a device that physically stimulates the player such as a vibrator may be built in a band for fixing the HMD or the interactive input device, and may feed back an action to the player in accordance with the game situation. For example, when a given player defends against an enemy's attack or defeats an enemy in the vicinity of the player, vibration as shock may be given to the player, thus providing a real presentation effect.

The controller may distribute all data to all the player processors or may distribute data required for a given player processor. When the controller distributes all data, each player processor selectively uses only required data.

In the arrangement of the embodiment, the outputs from the video cameras 103 are input to only the image input unit 104. Also, these outputs can be supplied to the head location/posture measuring unit 101 as correction information for the head location/posture sensor 1011. In this case, when an object whose absolute coordinate position does not change such as a table, a real space object placed as an obstacle, or the like is marked in a color that can be easily detected by an image process, correction is easy.

The number of parallel lines used as the pointer display is not limited to three, but can be selected from arbitrary values. In this case, three or more lines are preferably used to allow easy recognition of distance. On the other hand, when too many lines are used, a portion that overlaps the pointer display becomes hard to see, or complexity increases with increasing number of players. Hence, the number of parallel lines can be appropriately determined in correspondence with the space size and the number of players.

In the above embodiment, commands are input by detecting actions of the interactive input device without using the trigger 1022. Alternatively, the player may input various commands using the trigger 1022, or detected actions and the ON/OFF state of the trigger may be combined. Furthermore, a switch which is turned on/off in correspondence with player actions may be built in the interactive input device and may be used as the trigger.

(Another embodiments)

A game apparatus, a command inputting method and command processing thereof according to the present invention are described hereinafter.

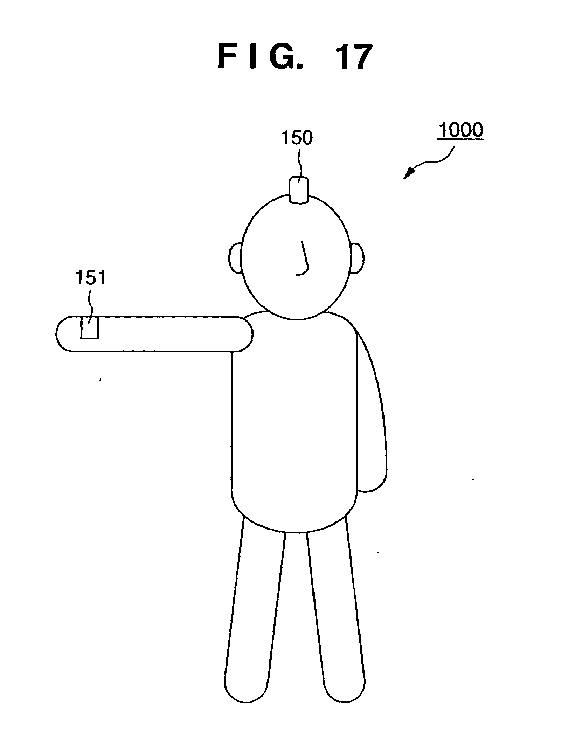

Fig. 17 shows a user 1000 who manipulates the game apparatus of this embodiment. A magnetic sensor 150 as an example of a location/posture detection means is attached to the head of the user 1000, and a magnetic sensor 151 is also attached to a hand. The magnetic sensors output electrical signals including information of a three-dimensional location (x, y, z) and posture (roll, pitch, yaw) of the portions where they are attached.

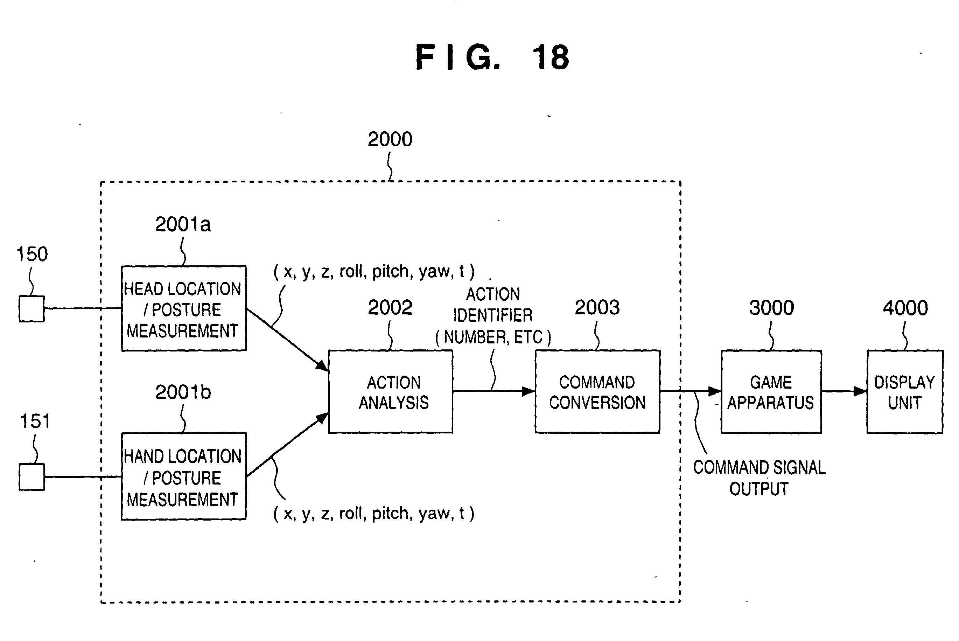

Fig. 18 shows the game apparatus system of this embodiment. Referring to Fig. 18, the game system of this embodiment has a command generation unit 2000 for receiving signals from the two sensors and converting them into a command, and a game apparatus 3000. The command generation unit 2000 analyzes an action of the user 1000 on the basis of the output signals from the sensors 150 and 151, and generates a command in accordance with the analysis result. The generated command is sent to the game apparatus 3000, which executes the command, i.e., the game progresses.

The game apparatus 3000 displays progress of the game on a display unit 4000 such as a display monitor, a head-mounted display (HMD) the user wears on his or her head, or the like, and the user can make actions such as loading, shooting, defense, and the like with respect to a "target" as a CG image generated by the game apparatus 300 within the displayed virtual space.

The arrangement and operation of the command generation unit 2000 will be described below. As shown in Fig. 18, the unit 2000 has location/posture measurement sections 2001a and 2001b, action analysis section 2002, and command conversion section 2003.

The location/posture measurement sections 2001a and 2001b convert electrical signals input from the location sensors 150 and 151 into six each coordinate values representing the locations/postures of the individual portions, and send them to the action analysis section 2002. The location/posture measurement sections 2001a and 2001b have internal clocks to measure measurement times t in addition to the six each coordinate values of the locations/postures, and output the measured times to the action analysis section 2002.

The action analysis section 2002 analyzes an action in consideration of not only the absolute locations/postures of the head and hand but also their relative location/posture. This is for the following reason. That is, a person normally expresses his or her own intention by actions of a plurality of body portions. In other words, when the location/posture of only one portion are detected and the user's intention is estimated based on them, many errors are produced even when the detected location/posture have high precision. For example, as for a forward stretching action of the arm, a forward stretching action of the arm with the head facing forward has a meaning different from that with the head facing another direction. For example, if the action "to stretch the arm forward" means "attack", since attack is normally done with the player's head facing the target (i.e., in the stretching direction of the arm), the player may intend an action other than attack if he or she stretched the arm with the head facing another direction. Hence, if no posture is taken into consideration, a forward stretching action of the arm with the head facing another direction is highly likely to be erroneously recognized as attack. For this reason, in this embodiment, the estimation precision of the user's intention is improved by taking relative location/posture (e.g., the location/posture of the hand relative to those of the head) into consideration.

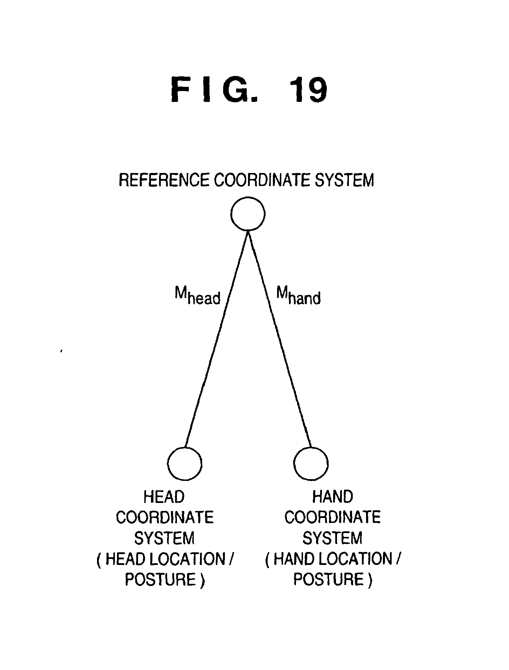

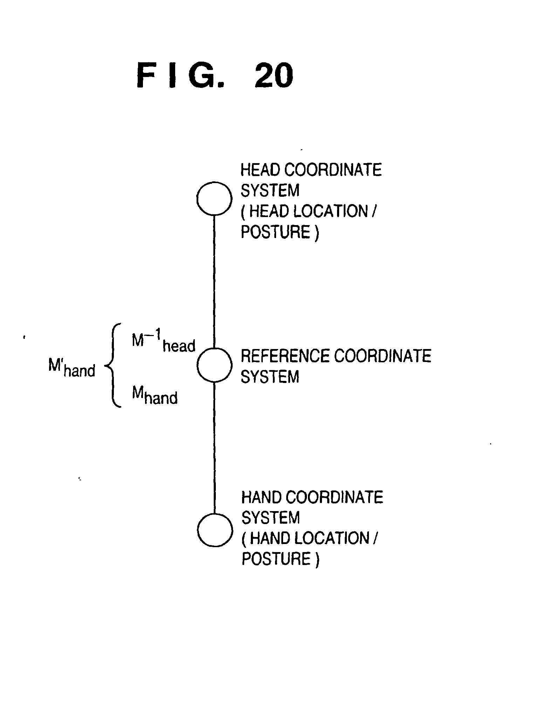

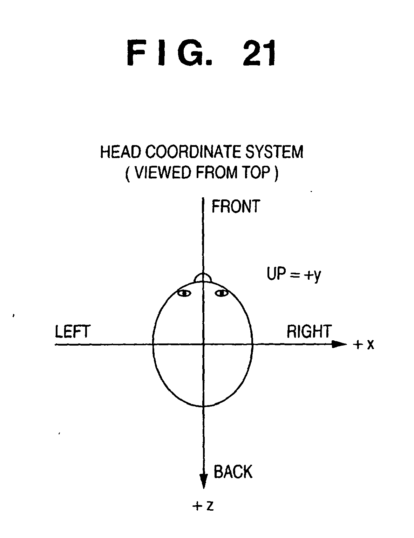

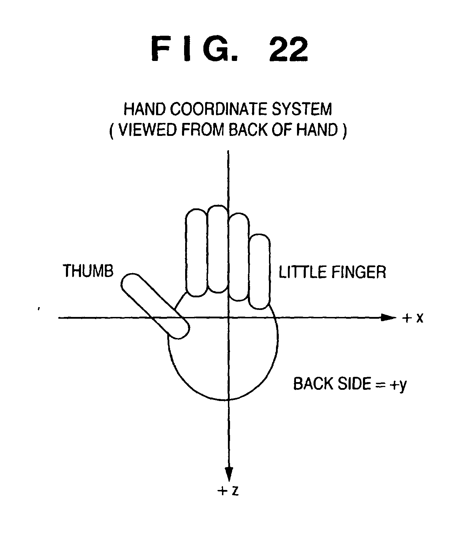

Fig. 19 shows the relationship between the locations/postures of the head and hand in a reference coordinate system, and Fig. 20 shows the relationship between the locations/postures of the head and hand in a head coordinate system. Figs. 21 and 22 respectively show the head and hand coordinate systems.

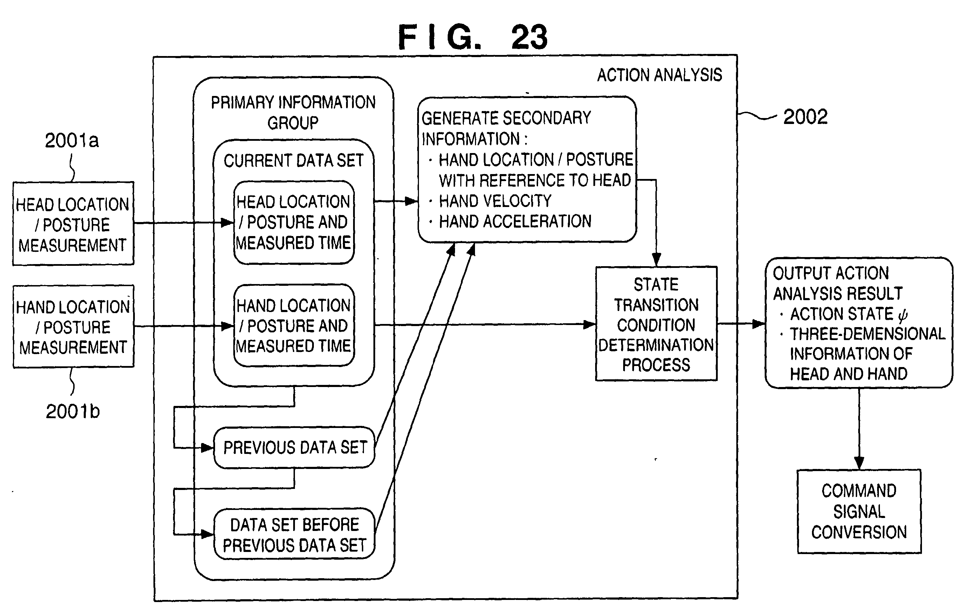

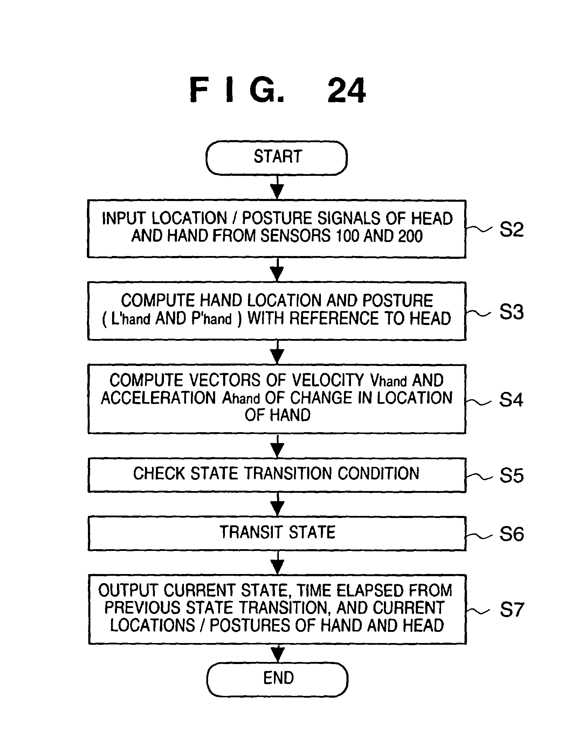

Fig. 23 shows the functions of the action analysis section 2002. The functions shown in Fig. 23 are implemented by the control sequence according to the flow chart shown in Fig. 24. According to the flow chart shown in Fig. 24, after starting the process, three-dimensional locations ($L_{head}$ and $L_{hand}$) and postures $P(P_{head}$ and $P_{hand})$ of the head and hand are input from the location/posture measurement sections 2001 in step S2, and a location and posture ($L'_{hand}$ and $P'_{hand}$) of the hand relative to the head are computed based on the input locations and postures in step S3. More specifically, a coordinate transform matrix $M_{hand}$ from the reference coordinate system into the hand coordinate system is computed on the basis of the hand location and posture ($L_{hand}$ and $P_{hand}$), a coordinate transform matrix $M_{head}$ from the reference coordinate system into the head coordinate system is computed on the basis of the location and posture ($L_{head}$ and $P_{head}$) of the head, and based on these matrices, a coordinate transform matrix $M'_{hand}$ from the head coordinate system into the hand coordinate system is computed by:

$$M'_{hand} = M_{hand} \cdot M_{head}^{-1} \tag{1}$$

where $M_{head}^{-1}$ is the inverse matrix of $M_{head}$. The relative location and posture ($L'_{hand}$, $P'_{hand}$) of the hand with reference to the head (i.e., in the head coordinate system) can be easily derived from $M'_{hand}$.

In step S4, change velocity $V_{hand}$ (time derivative of $L'_{hand}$) of the hand location $L'_{hand}$, and acceleration $A_{hand}$ (time derivative of velocity $V_{hand}$) are computed. Note that the currently measured location and posture ($L'_{hand}$, $P'_{hand}$) of the hand relative to the head are stored in a predetermined memory for the next velocity and acceleration computations in step S4. In this case, data for two previous measurements suffice. In this specification, a combination of information of the location, posture, time, and the like for the head, and those for the hand input from the location/posture measurement sections 2001 is called "primary information", and the location and posture, and velocity and acceleration of the hand with reference to the head are called "secondary information".

It is checked in step S5 if "secondary information" satisfies a predetermined state transition condition so as to determine transition of state φ. Then, the state transits to another state corresponding to the transition condition in which the "secondary information" is satisfied (step S6). After the transition, the current status, time elapsed from the previous state transition, and current location/posture of the hand and head are outputted (step S7).

The operation of the action analysis section 2002 upon applying the functions shown in Figs. 23 and 24 to an action (shooting) game will be explained below. In this shooting game, the following five states are defined, and values '0 to 4 are assigned in advance to these states.

0 = initial state
1 = loading (load a gun) state
2 = shooting state
3 = defense (protect a player) state
4 = operation guidance state

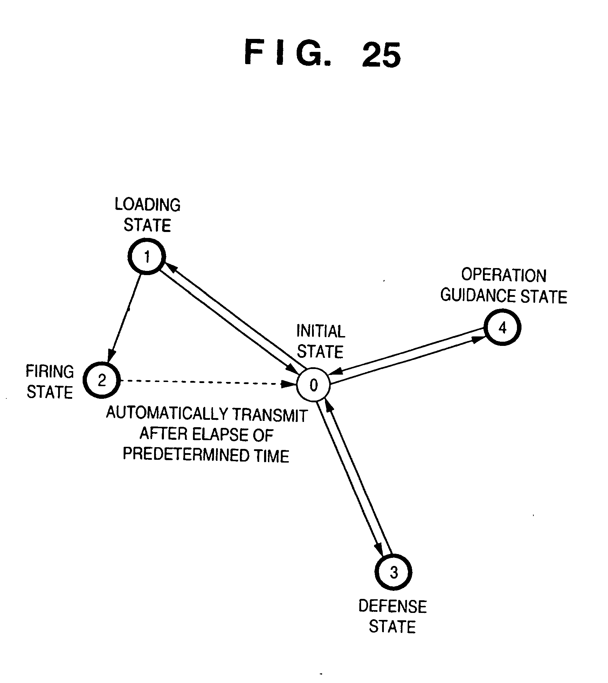

In this game apparatus, an action is expressed by a change in state value. As shown in Fig. 25, actions defined in this game apparatus are as follows:

Transition Action

$* \rightarrow *$ No action (no change in state value)
$0 \rightarrow 1$ Loading action
$1 \rightarrow 0$ Loading cancel action
$1 \rightarrow 2$ Firing action
$0 \rightarrow 3$ Defense action
$3 \rightarrow 0$ Defense cancel action
$0 \rightarrow 4$ Operation guidance action
$4 \rightarrow 0$ Operation guidance cancel action

Note that the initial state is restored a predetermined period of time elapsed after the firing state. The output from the action analysis section 2002 includes action state $\varphi$ and three-dimensional information of the head and hand.

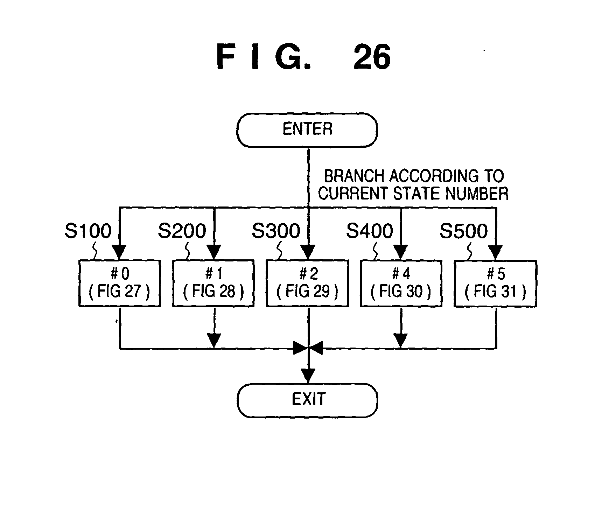

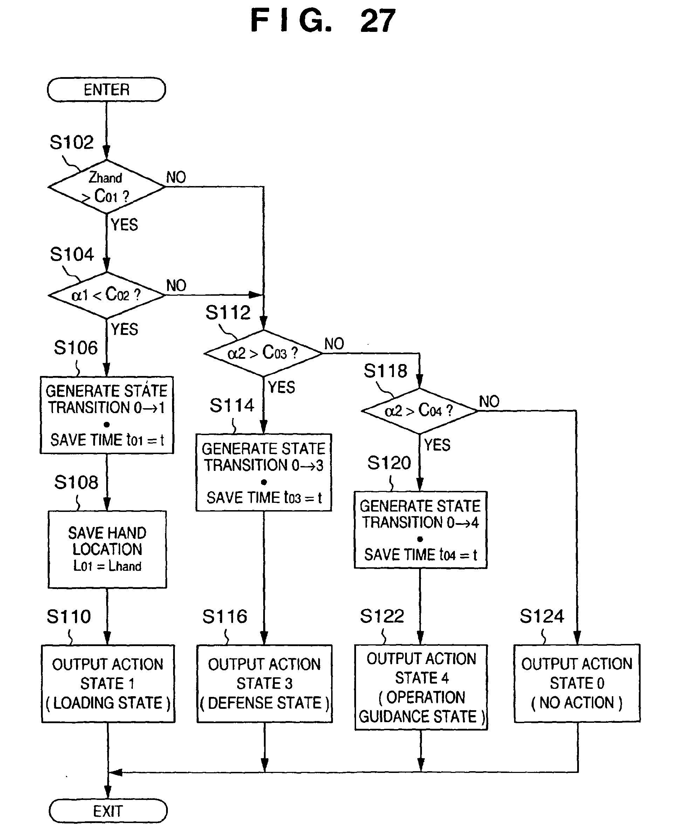

Fig. 26 is a flow chart showing the overall state transition condition determination process of the action analysis section 2002. More specifically, the action analysis section 2002 executes one of steps S100, S200, S300, S400, and S500 (respectively shown in detail in Figs. 27, 28, 29, 30, and 31) in accordance with the current state value $\varphi$. Each of steps S100, S200, S300, S400, and S500 outputs the action state value $\varphi$ after transition, and three-dimensional information of the head and hand.

The control sequence when the current state value = 0, i.e., "initial state" is currently set, will be explained below with reference to Fig. 27. There are four states to which the initial state can transit, i.e., state 0 (no transition), state 1 (loading state), state 3 (defense state), and state 4 (operation guidance state), in the game apparatus of this embodiment. In the control sequence shown in Fig. 27, to which of the four states the initial state is to transit is determined in consideration of the amount of backward movement of the hand with respect to the head in the back (z) direction, the deviation of the angle the back-and-forth direction (z-direction in Fig. 22) of the hand makes with the back direction (z-direction in Fig. 21) of the player's head, the deviation of the angle the back of the hand (y-direction in Fig. 22) makes with the back direction of the head, and the like. Hence, the following variables $Z_{hand}$, $\alpha_1$, and $\alpha_2$ must be considered in the control sequence shown in Fig. 27.

$Z_{hand}$: z-coordinate value of hand location with reference to head coordinate system (see Fig. 21)
$\alpha_1$: angle z-axis of head coordinate system makes with that of hand coordinate system (see Fig. 22)
$\alpha_2$: angle z-axis of head coordinate system makes with y-axis of hand coordinate system

Assume that constant values $C_{01}$, $C_{02}$, $C_{03}$, and $C_{04}$ are respectively:

$C_{01}$ = 0.0 (length)
$C_{02}$ = 45°
$C_{03}$ = 150°
$C_{04}$ = 30°

Then, if YES in steps S102 and S104, i.e.,

$$z_{hand} > C_{01} \ \text{and} \ \alpha_1 < C_{02}$$

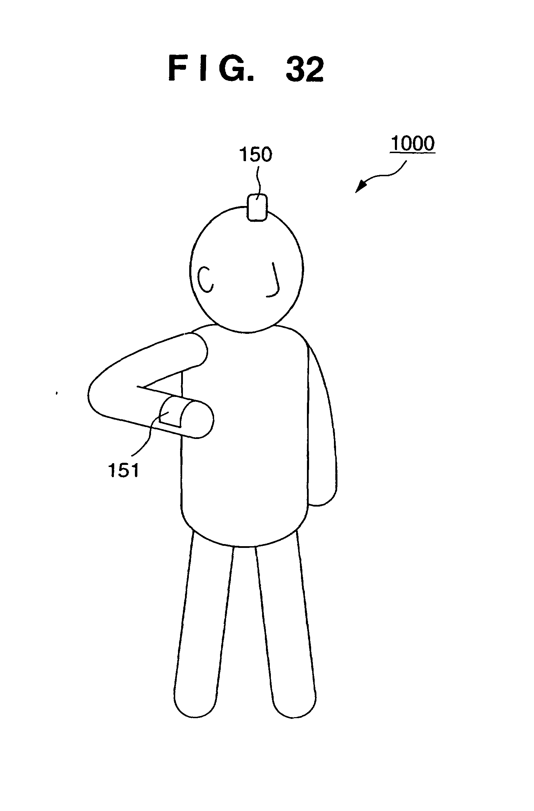

in other words, if the player has moved the hand backward to a location behind the center of the head ($C_{01}$ = 0.0) in the back direction of the head while the deviation of the angle the direction of the hand makes with the back direction of the head is kept suppressed to be equal to or smaller than 45° (Fig. 32), it is determined that the player wants to make a loading action. Then, the current time t is saved in a register $t_{01}$ in step S106, the current hand location $L_{hand}$ is saved in a register $L_{01}$ in step S108, and an action state value = 1 (loading state) is output in step S110.

On the other hand, if NO in steps S102 and S104, and YES in step S112, i.e.,

$$z_{hand} \leq C_{01} \text{ and } \alpha_1 \geq C_{02} \text{ and } \alpha_2 > C_{03}$$

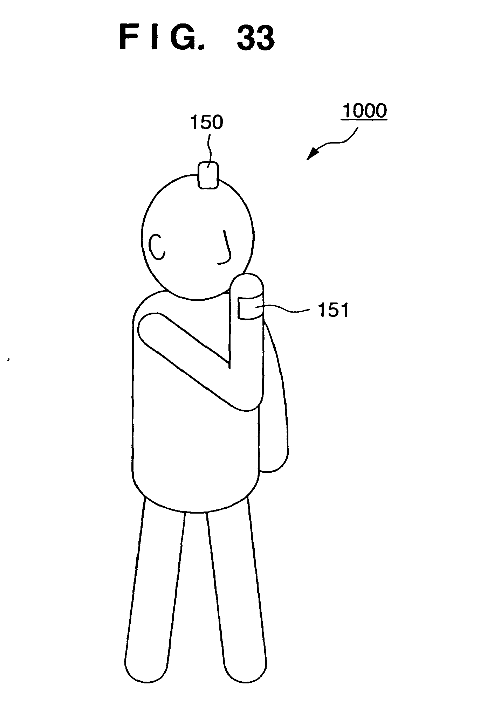

in other words, if the player has moved the hand to a location in front of the central position of the head (Fig. 33) while the deviation of the angle the direction of the hand makes with the back direction of the head is 45° or more, and an angle the direction perpendicular to the back of the hand makes with the back direction of the head is 150° or more, it is determined that the player wants to make a defense action. Then, the current time t is saved in a register $t_{03}$ in step S114, and an action state value = 3 (defense state) is output in step S116.

On the other hand, if NO in steps S102, S104, and S112, and YES in step S118, i.e.,

$$z_{hand} \leq C_{01} \text{ and } \alpha_1 \geq C_{02} \text{ and } \alpha_2 < C_{04}$$

in other words, if the player has moved the hand to a location in front of the central position of the head while the deviation of the angle the direction of the hand makes with the back direction of the head is 45° or more, and an angle the direction perpendicular to the back of the hand makes with the back direction of the head is 30° or less, it is determined that the player wants an operation guidance (i.e., HELP). Then, the current time t is saved in a register $t_{04}$ in step S120, and an action state value = 4 (operation guidance state) is output in step S122.

On the other hand, if NO in steps S102, S104, S112, and S118, i.e.,

$$z_{hand} \leq C_{01} \text{ and } \alpha_1 \geq C_{02} \text{ and } C_{04} \leq \alpha_2 \leq C_{03}$$

it is determined that the player's action is not large enough to issue a command, and the initial state is maintained in step S124.

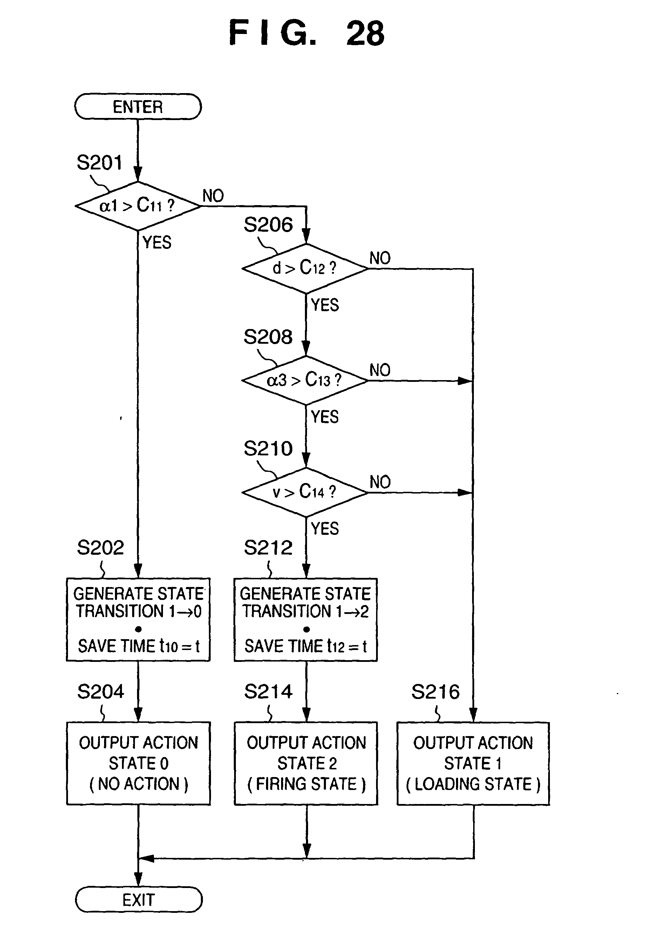

The control sequence when the current state is the loading state (= 1) will be explained below with reference to Fig. 28. There are three states to which the loading state can transit, i.e., state 0 (initial state), state 1 (no transition), and state 2 (firing state), as shown in Fig. 25. In the control sequence shown in Fig. 28, a hand moving distance d, hand angle $\alpha_3$, and hand moving velocity v are referred to in addition to the aforementioned angle $\alpha_1$. Note that

d: distance from hand location $L_0$ to current hand location $L_{hand}$ when state transits from 0 to 1
$\alpha_3$: angle a velocity vector V of hand makes with z-axis of head coordinate system
v: moving velocity of hand

Assume that constant values $C_{11}$, $C_{12}$, $C_{13}$, and $C_{14}$ are respectively:

$C_{11}$ = 60° (to be compared with $\alpha_1$)
$C_{12}$ = 300 mm (to be compared with d)
$C_{13}$ = 120° (to be compared with $\alpha_3$)
$C_{14}$ = 300 mm/s (to be compared with v)

Then, if YES in step S201, i.e.,

$$\alpha_1 > C_{11}$$

in other words, the deviation of the angle the hand direction makes with the back direction of the head has exceeded 60°, it is determined that the player has made a loading action but does not want to fire. Then, the current time t is saved

in a register $t_{10}$ in step S202, and an action state value = 0 is output in step S204.

On the other hand, if NO in step S201 and YES in steps S206, 5208, and S210, i.e.,

$$\alpha_1 \leq C_{11}, \quad d > C_{12}, \quad \alpha_3 > C_{13}, \quad v > C_{14}$$

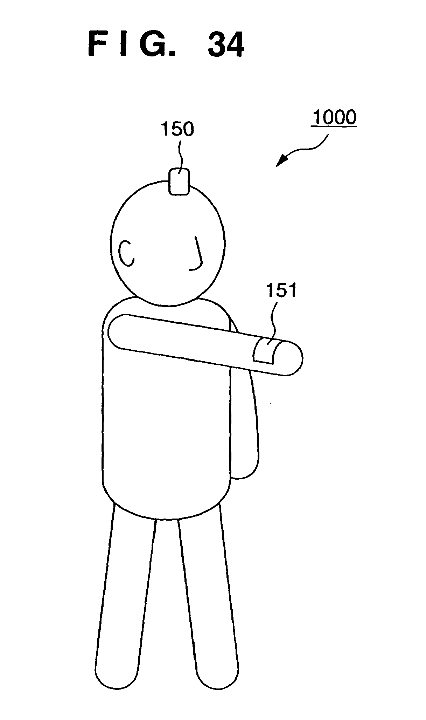

in other words, if a change in direction of the hand with respect to the head is not large, the hand moving distance is equal to or larger than $C_{12}$ (e.g., 300 mm), the angle the hand moving direction makes with the back direction of the head is equal to or larger than the angle $C_{13}$ (e.g., 120°), and the hand moving velocity is equal to or higher than $C_{14}$ (e.g., 3.00 mm/s) (Fig. 34), it is determined that the player wants to fire. Then, the current time t is saved in a register $t_{12}$ in step S212, and an action state value = 2 (firing state) is output in step S214.

On the other hand, if the above conditions are not satisfied, i.e.,

$$\alpha_1 \leq C_{11} \text{ and } d \leq C_{12} \text{ or } \alpha_3 \leq C_{13}, \quad v \leq C_{14}$$

the loading state is maintained.

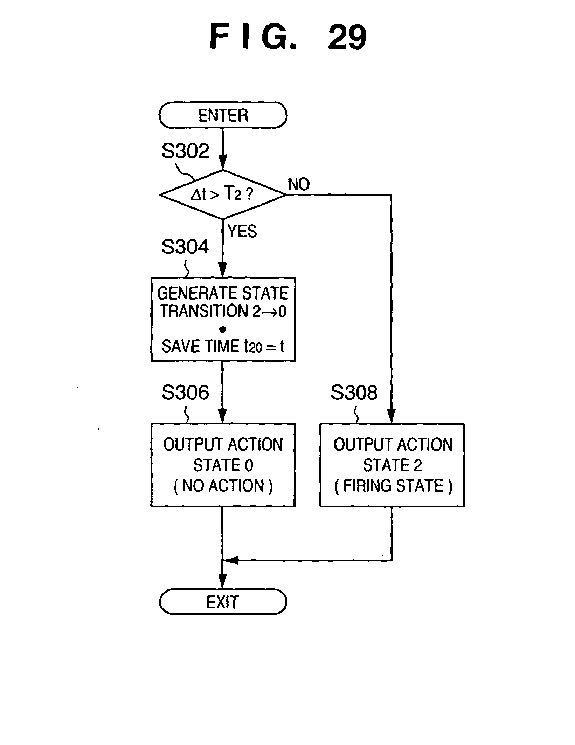

When the current state is the firing state (= 2), the control sequence shown in Fig. 29 is executed. In the example shown in Fig. 25, the firing state can transit to either the initial state or firing state (no transition). According to the control sequence shown in Fig. 29, if time $\Delta t$ elapsed after the loading state transits to the firing state is smaller than a constant value $T_2$ (e.g., 200 ms) (NO in step S302), the firing state is maintained in step S308. On the other hand, if time $\Delta t$ is equal to or longer than $T_2$, the current time is saved in step S304, and the state is returned to the initial state to output that state value in step S306.

In the example in Fig. 25, the initial state is unconditionally restored the predetermined period of time ($T_2$) after the beginning of shooting. Such simple state transition to the initial state is designed for the sake of simplicity upon explaining the rules of the game of the game apparatus of this embodiment. If the game has a complex flow (scenario), more states should be defined in correspondence with that complexity. In such case, more states in addition to the initial state may be defined as those to which the firing state can transit.

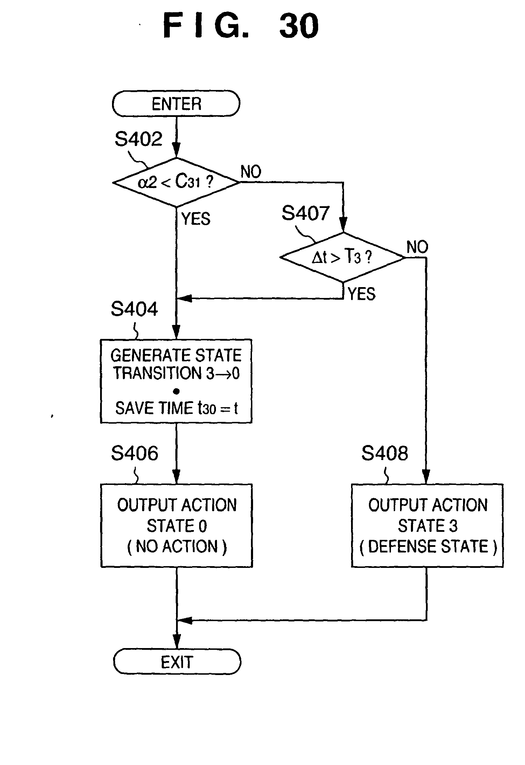

When the current state is the defense state (= 3), the control sequence shown in Fig. 30 is executed. In the example shown in Fig. 25, states to which the defense state can transit are only the initial state and the defense state (no transition). According to the control sequence shown in Fig. 30, it is checked in step S402 if an angle the posture of the hand makes with that of the head is smaller than a predetermined value $C_{31}$ (e.g., 150°). That is, if

$$\alpha_2 < C_{31}$$

in other words, if an angle the direction of the back of the hand makes with the back direction of the head is set to be less than 150°, it is determined that the defense state is canceled, and the current state is returned to the initial state and the current time is saved in step S404. Furthermore, the initial state (= 0) is output in step S406.

On the other hand, if NO in step S402, but if it is determined in step S407 that time $\Delta t$ elapsed after the previous state transited to the defense state is equal to or longer than a predetermined time $T_3$, the flow advances to step S404 to return the current state to the initial state like in the case wherein a sufficiently long time has elapsed from the firing state.

Furthermore, if NO in steps S402 and S407, i.e.,

$$\alpha_2 \geq C_{31} \text{ and } \Delta T \leq T_3$$

the defense state is maintained.

If the state transits to "operation guidance state" in step S122 in Fig. 27, i.e.,

$$z_{hand} \leq C_{01} \text{ and } \alpha_1 \geq C_{02} \text{ and } \alpha_2 \leq C_{04}$$

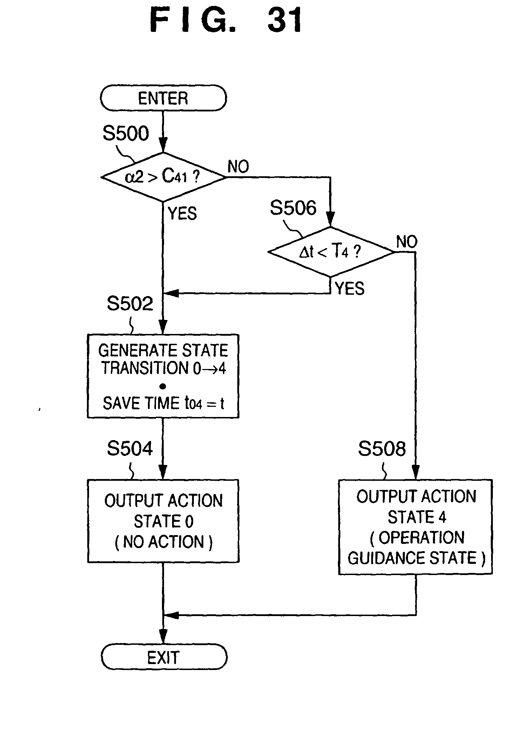

in other words, if the player moves the hand to a location in front of the central position of the head in the back direction of the head while the deviation of the angle the direction of the hand makes with the back direction of the head is 45° or more, and an angle the direction perpendicular to the back of the hand makes with the back direction of the head is 30° or less, this means that the player is watching the back or joint of the hand. In such case, since a state value = 4 is output to the game apparatus 3000, the apparatus 3000 displays a HELP window on the predetermined display device. Note that this display device is preferably a head-mounted display device (HMD). If the HMD is used, the player need not move the head upon watching the HELP window, and the control sequence (Fig. 31) for maintaining the "operation guidance state" need not be complicated.

Note that the HELP window may be either two- or three-dimensional display, or may be displayed in either a VR or AR environment, as long as it matches the current environment. In this embodiment, since the head location/posture sensor is attached to the player, it is preferable to display the HELP window in an AR environment in terms of efficient use of the sensor 150.

With the above arrangement, a command obtained by analyzing the user's action in consideration of user's will is supplied to the game apparatus 3000, and an image corresponding to the command is displayed within the virtual space displayed on the display unit 4000.

More specifically, a "target" is randomly displayed within the virtual space presented to the user by the game apparatus 3000, and the user shoots it by his or her actions. Since the user's action is reflected as a counteraction against the "target", the game with very high reality can be implemented.

Various modifications of the present invention can be made.

Modification 1:

In the above embodiment, commands and states shown in Fig. 25 are used. However, the present invention is not limited to such specific commands and states. That is, the user interface of the present invention is not limited to a game apparatus environment. The present invention can be applied to any other environments as long as the user's or player's actions are required to be used in place of commands (or instructions) upon presenting CG data to the user or player.

For example, the present invention may be applied to a sign language recognition user interface, a user interface for manipulating home electronic products, a user interface for manipulating industrial machines (special vehicles for construction work, factory lines), a user interface for physically handicapped person assist apparatuses (assist bed, motored wheelchair), and the like.

Modification 2:

When the present invention is applied to a game apparatus, the game to which the present invention is applied is not limited to the rules shown in Fig. 25. The present invention can be applied to more or less states (commands). Also, state transition is not limited to Fig. 25.

Modification 3:

In the game system of the above embodiment, since the action states have one-to-one correspondence with commands or instructions, the command conversion section 2003 can directly convert an action state into a command. However, the present invention is not limited to such specific system. That is, the command conversion unit 2003 is designed to improve compatibility to the game apparatus 3000 connected to the unit 2000. In other words, the game apparatus 3000 can be an existing versatile game apparatus. The existing game apparatus has an existing command system. The command conversion section 2003 is designed to have a table for receiving outputs (state, velocity, acceleration) from the action analysis section 2002, and converting them into a command system for the game apparatus 3000. This table is rewritable, and the table contents are rewritten in correspondence with the game apparatus 3000 used. In this way, the unit 2000 can be applied to a plurality of different types of game apparatuses having different command systems without changing the arrangement and operation of the unit 2000.

Modification 4:

In the above embodiment, sensors are attached to the head and hand. However, the present invention is not limited to this. That is, to achieve the objective for issuing a command by an action, the sensor may be attached to the fingertip, arm, leg, thigh, knee, or shin in place of the hand. For example, as an example of a sensor to be attached to finger joints, a so-called "glove type hand joint angle measurement device" has been put into practice.

Modification 5:

In the above embodiment, the command conversion section 2003 receives an action identifier from the analysis section 2002, and outputs a command signal corresponding to an action. Upon receiving this command, the command signal system of the programs and apparatuses (game apparatus and the like) that use the command signal is defined in the game apparatus 3000. However, the present invention is not limited to such specific command signal. As the command signal, the following formats are available. That is,

· to output a command signal as an electrical or optical signal;
· to implement command conversion as a function program on a computer, and output data to be written in a predetermined storage area by the function program to the conversion unit 2003 as a command signal;
· to implement command conversion as a function program on a computer, and launch a callback function which corresponds to a command in advance to use it as a command signal output; and
· to implement command conversion as a function program on a computer, and generate an interrupt signal which corresponds to a command in advance to use it as a command signal output.

Modification 6:

In the above embodiment, magnetic sensors are used as the sensors. Alternatively, the location/posture may be measured using an ultrasonic wave, mechanically, or by means of an image process.
The objects of the present invention are also achieve by supplying a storage medium (or recording medium), which records a program code of a software program that can implement the functions of the above-mentioned embodiments to a system or apparatus, and reading out and executing the program code stored in the storage medium by a computer (or a CPU or MPU) of the system or apparatus. In this case, the program code itself read out from the storage medium implements the functions of the above-mentioned embodiments, and the storage medium which stores the program code constitutes the present invention. The functions of the above-mentioned embodiments may be implemented not only by executing the readout program code by the computer but also by some or all of actual processing operations executed by an OS (operating system) running on the computer on the basis of an instruction of the program code.
Furthermore, the functions of the above-mentioned embodiments may be implemented by some or all of actual processing operations executed by a CPU or the like arranged in a function extension board or a function extension unit, which is inserted in or connected to the computer, after the program code read out from the storage medium is written in a memory of the extension board or unit.
To restate, according to the present invention, since an MR apparatus which allows a plurality of players to share an identical MR space is separately constructed by a section that executes processes inherent to each player, and a section for making the overall MR space management, the number of players can be easily increased/decreased.
Since virtual objects are laid out to hide user attached devices which are indispensable for the MR apparatus, the user can experience more real mixed reality, and a game presentation effect can be implemented in an application such as a game. Also, such virtual objects can improve the operability experienced by the player.
In addition, since the pointer display for pointing a point in a space is made using a plurality of parallel lines in place of planes, even when the number of persons who make pointing inputs increases or the space is narrow, the original display contents can be prevented from being disturbed by the pointer display. Since the pointer display is made up of lines, the processing load is light, and the distance to the pointed point can be easily recognized.
Further, since the game apparatus recognizes inputted commands based on an action/posture of the player, which is estimated from the information sensed by a location/posture sensor attached to the player, a user interface apparatus, user interface method, and game apparatus, to which the user (player) can easily sensuously become accustomed, and which can accurately recognize instructions (commands) that the user (player) intended can be provided.
As many apparently widely different embodiments of the present invention can be made without departing from the thereof, it is to be understood that the invention is not limited to the specific embodiments thereof except as defined in the appended claims.

**Claims**

**1.** A mixed reality apparatus **characterized by** comprising:

sensed image input means (104) for inputting a sensed image sensed by a camera (103) of a first player (100), first obtaining means (101, 1011), including a sensor of a display apparatus for experiencing the mixed reality attached to the head of the first player, for obtaining first position and orientation information representing position and orientation of the head of the first player,

second obtaining means (1, 101, 102), including at least a sensor of a display apparatus for experiencing the mixed reality attached to the head of a second player and a sensor of an interactive input device for supplying commands in the mixed reality attached to a body part of the second player, for obtaining second position and orientation information representing positions and orientations of a plurality of parts of the second player (200), said plurality of parts including at least the second player's head and the second player's body part at which the interactive input device is attached,

image generating means (107) for generating, using a player model based on the first and the second position and orientation information, an image (41 to 46) of a virtual object to be superimposed on a corresponding one of said plurality of parts of an image of the second player included in the sensed image for covering said part, and

image combining means (106) for generating an image representing mixed reality and to be presented to the first player, by combining the image of the virtual object with the sensed image,

wherein said player model is a model that approximates the second player by simple shapes, and the virtual object is a three-dimensional model of an object relating to the corresponding one of said plurality of parts of the sensed image of the second player, and

wherein the image generating means, for generating the image of the virtual object, so as to indicate a direction in which the second player is gazing, is adapted to use a change in display associated with a virtual eye within the image of the virtual object superimposed on the second player head based on a direction of the first position with respect to the second position and a direction of a visual axis of the second player acquired from the second orientation.

2. The mixed reality apparatus according to claim 1 **characterized in that** the plurality of parts of the second player include the second player's head, on which a display apparatus (105), through which the second player will experience the mixed reality, is to be mounted.

3. The mixed reality apparatus according to claim 1 **characterized in that** the second obtaining means is further adapted to obtain command information and the image generating means, in response to the command information, is adapted to chang the image of the virtual object.

4. A mixed reality representing method **characterized by** comprising:

sensed image input step of inputting a sensed image sensed by a camera of a first player,

first obtaining step of obtaining, by first obtaining means including a sensor of a display apparatus for experiencing the mixed reality attached to the head of the first player, first position and orientation information representing position and orientation of the head of the first player,

second obtaining step of obtaining, by second obtaining means including at least a sensor of a display apparatus for experiencing the mixed reality attached to the head of a second player and a sensor of an interactive input device for supplying commands in the mixed reality attached to a body part of the second player, second position and orientation information representing positions and orientations of a plurality of parts of the second player, said plurality of parts including at least the second player's head and the second player's body part at which the interactive input device is attached,

image generating step of generating, using a player model based on the first and the second position and orientation information, an image of a virtual object to be superimposed on a corresponding one of said plurality of parts of an image of the second player included in the sensed image for covering said part, and

image combining step of generating an image representing mixed reality and to be presented to the first player, by bombing the image of the virtual object with the sensed image,

wherein said player model is a model that approximates the second player by simple shapes, and the virtual object is a three-dimensional model of an object relating to the corresponding one of said plurality of parts of the sensed image of the second player, and

wherein the image generating step, for generating the image of the virtual object, so as to indicate a direction in which the second player is gazing, uses a change in display associated with a virtual eye within the image of the virtual object superimposed on the second player's head based on a direction of the first position with respect to the second position and a direction of a visual axis of the second player acquired from the second orientation.

**Patentansprüche**

1. Mischrealitätsvorrichtung, **gekennzeichnet durch**:

eine Aufnahmebild-Eingabeeinrichtung (104) zum Eingeben eines aufgenommenen Bilds, das **durch** eine Kamera (103) eines ersten Spielers (100) aufgenommen ist,
eine erste Erfassungseinrichtung (101, 1011), die einen Sensor einer Anzeigevorrichtung zum Wahrnehmen der Mischrealität umfasst, die an dem Kopf des ersten Spielers angebracht ist, zum Erfassen von ersten Positions- und Orientierungsinformationen, die eine Position und eine Orientierung des Kopfs des ersten Spielers darstellen,
eine zweite Erfassungseinrichtung (1, 101, 102), die zumindest einen Sensor einer Anzeigevorrichtung zum Wahrnehmen der Mischrealität, die an dem Kopf eines zweiten Spielers angebracht ist, und einen Sensor einer interaktiven Eingabevorrichtung zum Bereitstellen von Befehlen in der Mischrealität umfasst, die an einem Körperteil des zweiten Spielers angebracht ist, zum Erfassen von zweiten Positions- und Orientierungsinformationen, die Positionen und Orientierungen einer Vielzahl von Teilen des zweiten Spielers (200) darstellen, wobei die Vielzahl von Teilen zumindest den Kopf des zweiten Spielers und den Körperteil des zweiten Spielers umfassen, an dem die interaktive Eingabevorrichtung angebracht ist,
eine Bilderzeugungseinrichtung (107) zum Erzeugen eines Bilds (41 bis 46) eines virtuellen Objekts, das einem entsprechenden der Vielzahl von Teilen eines Bilds des zweiten Spielers, das in dem aufgenommenen Bild umfasst ist, zum Abdecken dieses Teils zu überlagern ist, unter Verwendung eines Spielermodells basierend auf den ersten und den zweiten Positions- und Orientierungsinformationen, und
eine Bildkombinationseinrichtung (106) zum Erzeugen eines Bilds, das eine Mischrealität darstellt und dem ersten Spieler darzustellen ist, **durch** Kombinieren des Bilds des virtuellen Objekts mit dem aufgenommenen Bild,
wobei das Spielermodell ein Modell ist, das den zweiten Spieler durch einfache Formen annähert, und das virtuelle Objekt ein dreidimensionales Modell eines Objekts mit Bezug auf den entsprechenden der Vielzahl von Teilen des aufgenommenen Bilds des zweiten Spielers ist, und
wobei die Bilderzeugungseinrichtung zum Erzeugen des Bilds des virtuellen Objekts, um eine Richtung zu bezeichnen, in die der zweite Spieler blickt, angepasst ist zum Verwenden einer Änderung einer Anzeige, die mit einem virtuellen Auge innerhalb des Bilds des virtuellen Objekts in Zusammenhang steht, , das dem Kopf des zweiten Spielers überlagert wird, basierend auf einer Richtung der ersten Position in Bezug auf die zweite Position und einer Richtung einer Sehachse des zweiten Spielers, die aus der zweiten Orientierung erhalten wird.

2. Mischrealitätsvorrichtung gemäß Anspruch 1, **dadurch gekennzeichnet, dass** die Vielzahl von Teilen des zweiten Spielers den Kopf des zweiten Spielers umfassen, an dem eine Anzeigevorrichtung (105) anzubringen ist, durch die der zweite Spieler die Mischrealität wahrnehmen wird.

3. Mischrealitätsvorrichtung gemäß Anspruch 1, **dadurch gekennzeichnet, dass** die zweite Erfassungseinrichtung ferner angepasst ist zum Erfassen von Befehlsinformationen, und die Bilderzeugungseinrichtung angepasst ist zum Ändern des Bilds des virtuellen Objekts in Erwiderung auf die Befehlsinformationen.

4. Mischrealitätsdarstellungsverfahren, **gekennzeichnet durch**:

einen Aufnahmebild-Eingabeschritt des Eingebens eines aufgenommenen Bilds, das **durch** eine Kamera eines ersten Spielers aufgenommen ist,
einen ersten Erfassungsschritt des Erfassens von ersten Positions- und Orientierungsinformationen, die eine Position und eine Orientierung des Kopfs des ersten Spielers darstellen, **durch** eine erste Erfassungseinrichtung, die einen Sensor einer Anzeigevorrichtung zum Wahrnehmen der Mischrealität umfasst, die an dem Kopf des ersten Spielers angebracht ist,
einen zweiten Erfassungsschritt des Erfassens von zweiten Positions- und Orientierungsinformationen, die Positionen und Orientierungen einer Vielzahl von Teilen eines zweiten Spielers darstellen, **durch** eine zweite Erfassungseinrichtung, die zumindest einen Sensor einer Anzeigevorrichtung zum Wahrnehmen der Mischrealität, die an dem Kopf des zweiten Spielers angebracht ist, und einen Sensor einer interaktiven Eingabevorrichtung zum Bereitstellen von Befehlen in der Mischrealität umfasst, die an einem Körperteil des zweiten Spielers angebracht ist, wobei die Vielzahl von Teilen zumindest den Kopf des zweiten Spielers und den Körperteil des zweiten Spielers umfassen, an dem die interaktive Eingabevorrichtung angebracht ist,
einen Bilderzeugungsschritt des Erzeugens eines Bilds eines virtuellen Objekts, das einem entsprechenden der Vielzahl von Teilen eines Bilds des zweiten Spielers, das in dem aufgenommenen Bild umfasst ist, zum Abdecken dieses Teils zu überlagern ist, unter Verwendung eines Spielermodells basierend auf den ersten und den zweiten Positions- und Orientierungsinformationen, und

einen Bildkombinationsschritt des Erzeugens eines Bilds, das eine Mischrealität darstellt und dem ersten Spieler darzustellen ist, **durch** Kombinieren des Bilds des virtuellen Objekts mit dem aufgenommenen Bild,

wobei das Spielermodell ein Modell ist, das den zweiten Spieler durch einfache Formen annähert, und das virtuelle Objekt ein dreidimensionales Modell eines Objekts mit Bezug auf den entsprechenden der Vielzahl von Teilen des aufgenommenen Bilds des zweiten Spielers ist, und

wobei der Bilderzeugungsschritt zum Erzeugen des Bilds des virtuellen Objekts, um eine Richtung zu bezeichnen, in die der zweite Spieler blickt, eine Änderung einer Anzeige, die mit einem virtuellen Auge innerhalb des Bilds des virtuellen Objekts in Zusammenhang steht, das dem Kopf des zweiten Spielers überlagert wird, basierend auf einer Richtung der ersten Position in Bezug auf die zweite Position und einer Richtung einer Sehachse des zweiten Spielers verwendet, die aus der zweiten Orientierung erhalten wird.

## Revendications

1. Appareil à réalité mixte **caractérisé en ce qu'**il comprend:

   un moyen (104) d'entrée d'image détectée destiné à la fourniture en entrée d'une image détectée par une caméra (103) d'un premier joueur (100),

   des premiers moyens d'obtention (101, 1011), comportant un capteur d'un appareil d'affichage destiné à ressentir la réalité mixte et fixé à la tête du premier joueur, destinés à obtenir des premières informations de position et d'orientation représentant la position et l'orientation de la tête du premier joueur,

   des seconds moyens d'obtention (1, 101, 102), comportant au moins un capteur d'un appareil d'affichage pour faire ressentir la réalité mixte et fixé à la tête d'un second joueur et un capteur d'un dispositif d'entrée interactif destiné à fournir des commandes dans la réalité mixte et fixé à une partie du corps du second joueur, destinés à obtenir des secondes informations de position et d'orientation représentant des positions et des orientations d'une pluralité de parties du second joueur (200), ladite pluralité de parties comportant au moins la tête du second joueur et la partie de corps du second joueur à laquelle est fixé le dispositif d'entrée interactif,

   des moyens générateurs d'image (107) destinés à générer, à l'aide d'un modèle de joueur et sur la base des premières et secondes informations de position et d'orientation, une image (41 à 46) d'un objet virtuel devant être superposée à l'une, correspondante, de ladite pluralité de parties d'une image du second joueur contenues dans l'image détectée afin de recouvrir ladite partie, et

   des moyens de combinaison d'images (106) destinés à générer une image représentant une réalité mixte et devant être présentée au premier joueur, en combinant l'image de l'objet virtuel et l'image détectée,

   dans lequel ledit modèle de joueur est un modèle qui représente approximativement le second joueur par des formes simples, et l'objet virtuel est un modèle tridimensionnel d'un objet associé à l'une, correspondante, de ladite pluralité de parties de l'image détectée du second joueur, et

   dans lequel les moyens générateurs d'image destinés à générer l'image de l'objet virtuel de manière à indiquer la direction du regard du second joueur, sont aptes à utiliser une modification de l'affichage associé à un oeil virtuel au sein de l'image de l'objet virtuel superposée à la tête du second joueur sur la base d'une direction de la première position par rapport à la seconde position et d'une direction d'un axe visuel du second joueur acquise par rapport à la seconde orientation.

2. Appareil à réalité mixte selon la revendication 1, **caractérisé en ce que** la pluralité de parties du second joueur comprennent la tête du second joueur sur laquelle doit être monté un appareil d'affichage (105) au moyen duquel le second joueur ressentira la réalité mixte.

3. Appareil à réalité mixte selon la revendication 1, **caractérisé en ce que** les seconds moyens d'obtention sont en outre aptes à obtenir des informations de commande et **en ce que** les moyens générateurs d'image sont aptes, en réponse aux informations de commande, à modifier l'image de l'objet virtuel.

4. Procédé de représentation de réalité mixte, **caractérisé en ce qu'**il comprend :

   une étape d'entrée d'image détectée consistant à fournir en entrée une image détectée par une caméra d'un premier joueur,

   une première étape d'obtention consistant à obtenir, à l'aide de premiers moyens d'obtention comportant un capteur d'un appareil d'affichage destiné à faire ressentir la réalité mixte et fixé à la tête du premier joueur, des premières informations de position et d'orientation représentant la position et l'orientation de la tête du premier joueur,

une seconde étape d'obtention consistant à obtenir, à l'aide de seconds moyens d'obtention comportant au moins un capteur d'un appareil d'affichage destiné à faire ressentir la réalité mixte et fixé à la tête d'un second joueur, et un capteur d'un dispositif d'entrée interactif destiné à fournir des commandes dans la réalité mixte et fixé à une partie du corps du second joueur, des secondes informations de position et d'orientation représentant des positions et des orientations d'une pluralité de parties du second joueur, ladite partie comprenant au moins la tête du second joueur et la partie de corps du second joueur à laquelle est fixé le dispositif d'entrée interactif,

une étape de génération d'image consistant à générer, à l'aide d'un modèle de joueur basé sur les première et seconde informations de position et d'orientation, une image d'un objet virtuel devant être superposée à l'une, correspondante, de ladite pluralité de parties d'une image du second joueur contenues dans l'image détectée afin de recouvrir ladite partie, et

une étape de combinaison d'images consistant à générer une image représentant une réalité mixte et devant être présentée au premier joueur, en combinant l'image de l'objet virtuel à l'image détectée,

dans lequel ledit modèle de joueur est un modèle qui représente approximativement le second joueur par des formes simples, et l'objet virtuel est un modèle tridimensionnel d'un objet associé à l'une, correspondante, de ladite pluralité de parties de l'image détectée du second joueur, et

dans lequel l'étape de génération d'image destinée à générer l'image de l'objet virtuel de manière à indiquer la direction du regard du second joueur, utilise une modification de l'affichage associé à un oeil virtuel au sein de l'image de l'objet virtuel superposée à la tête du second joueur sur la base d'une direction de la première position par rapport à la seconde position et d'une direction d'un axe visuel du second joueur acquise par rapport à la seconde orientation.

**FIG. 1**

EP 1 060 772 B1

# F I G.  2

**103**
VIDEO
CAMERA

**1011**
HEAD LOCATION
/ POSTURE SENSOR

**105**
HEAD-MOUNTED
IMAGE DISPLAY DEVICE

**102**
INTERACTIVE
INPUT DEVICE

# FIG. 3A

331
OBJECT
LOCATION
SENSOR

34
VIRTUAL OBJECT
(TARGET)

33
MOVABLE
REAL
OBJECT

31
STILL REAL
OBJECT

30

32

# FIG. 3B

31
REAL OBJECT

32
REAL OBJECT

PLAYER

FRONT

34
VIRTUAL
OBJECT
(TARGET)

30
TABLE

33
REAL OBJECT

(TOP VIEW)

EP 1 060 772 B1

# F I G. 4

```
                    ┌──────────────┐
                    │    START     │
                    └──────────────┘
                           │
                           ▼         S601
                      ╱─────────╲
                   ╱─────────────────╲      NO
                  ╲  COMMAND INPUT ?  ╱──────────┐
                   ╲─────────────────╱           │
                      ╲─────────╱                 │
                           │ YES                  │
                           ▼         S603         │
                    ┌──────────────┐              │
                    │SHOOTING DISPLAY│             │
                    └──────────────┘              │
                           │         S604         │
                      ╱─────────╲                 │
              NO    ╱─────────────╲               │
          ┌────────╲   OBJECT ?   ╱               │
          │         ╲─────────────╱               │
          │            ╲───────╱                  │
          │                │ YES                  │
   S606   ▼                │          S605        │
     ╱─────────╲           │                      │
   ╱─────────────╲         ▼        ╱─────────╲   │
NO│   RANGE      │      ╱─────────────╲    YES    │
┌─╲  REACHED ?   ╱─────╲   TARGET ?   ╱──────────┐│
│  ╲─────────────╱      ╲─────────────╱          ││
│     ╲───────╱    YES     ╲───────╱             ││
│        │                     │ NO              ││
│        │                     ▼      S607       ▼   S608
│        └─────────────►┌──────────────────┐ ┌──────────────────┐
│                       │END SHOOTING DISPLAY│ │END SHOOTING DISPLAY│
│                       └──────────────────┘ └──────────────────┘
│                              │                     │   S609
│                              │             ┌──────────────────────┐
│                              │             │DISPLAY EXPLODED IMAGE │
│                              │             └──────────────────────┘
│                              ▼
│                       ┌──────────────┐
│                       │     END      │
│                       └──────────────┘
```

26

# F I G. 5

F I G. 6A

F I G. 6B

F I G. 6C

43

47

47

47'

EP 1 060 772 B1

# F I G. 7

VIRTUAL SWORD

VIRTUAL GUN

FIG. 8B

FIG. 8A

FIG. 8C

FIG. 8D

# FIG. 9

ANGLE a : ANGULAR DIFFERENCE BETWEEN VISUAL AXIS
DIRECTION OF PLAYER 1 AND DIRECTION TO PLAYER 2

PLAYER 2                                    PLAYER 1

a

VISUAL AXIS DIRECTION OF PLAYER 1

# F I G. 10

```
        ┌─────────────┐
        │    START    │
        └──────┬──────┘
               ▼
S701  ┌────────────────────────────────────┐
      │ ACQUIRE HEAD LOCATION AND VIEW POINT│
      │ POSITION INFORMATION OF ANOTHER PLAYER│
      └────────────────┬───────────────────┘
                       ▼
S702  ┌────────────────────────────────────┐
      │   ACQUIRE SELF LOCATION INFORMATION │
      └────────────────┬───────────────────┘
                       ▼
S703  ┌────────────────────────────────────┐
      │ COMPUTE SHORTEST DISTANCE DIRECTION TO│
      │          ANOTHER PLAYER            │
      └────────────────┬───────────────────┘
                       ▼
S704  ┌────────────────────────────────────┐
      │  COMPUTE VISUAL AXIS DIRECTION OF  │
      │          ANOTHER PLAYER            │
      └────────────────┬───────────────────┘
                       ▼
S705  ┌────────────────────────────────────┐
      │ COMPUTE ANGULAR DIFFERENCE BETWEEN │
      │ SHORTEST DISTANCE DIRECTION AND VISUAL│
      │          AXIS DIRECTION            │
      └────────────────┬───────────────────┘
                       ▼
S706  ┌────────────────────────────────────┐
      │            LOOK UP TABLE           │
      └────────────────┬───────────────────┘
                       ▼
S707  ┌────────────────────────────────────┐
      │            RE-DISPLAY              │
      └────────────────┬───────────────────┘
                       ▼
S708         ◇ PREDETERMINED ◇ ── NO ──┐
             ◇ ANGLE OR LESS ? ◇        │
                  │ YES                 │
                  ▼                     │
S709  ┌────────────────────────────────┐│
      │         ADD VISUAL EFFECT       ││
      └────────────────┬───────────────┘│
                       ▼◄───────────────┘
                ┌─────────────┐
                │     END     │
                └─────────────┘
```

# FIG. 11A

91

92

93

43

# FIG. 11B

91

d

92

93

EP 1 060 772 B1

EP 1 060 772 B1

# FIG. 12A

FROM FRONT
TO BACK

# FIG. 12B

FROM BACK
TO FRONT

# FIG. 12C

91

93

92

PLAYER HIM/HERSELF
IS POINTED

# FIG. 13

EP 1 060 772 B1

# FIG. 14

# F I G. 15

MALLET IMAGE

230

2200  220L

240L

MARKER IMAGE

CG IMAGE

HEAD LOCATION
/ POSTURE

210L

250

260L

220R  3300

240R

210R

MARKER IMAGE
CG IMAGE
HEAD LOCATION
/ POSTURE

260R

1100

# F I G. 16

EP 1 060 772 B1

# F I G. 17

# FIG. 18

2000

2001a

150

HEAD LOCATION
/ POSTURE
MEASUREMENT

( x, y, z, roll, pitch, yaw, t )

ACTION
IDENTIFIER
( NUMBER, ETC )

2002

2003

3000

4000

ACTION
ANALYSIS

COMMAND
CONVERSION

GAME
APPARATUS

DISPLAY
UNIT

2001b

151

HAND LOCATION
/ POSTURE
MEASUREMENT

COMMAND SIGNAL
OUTPUT

( x, y, z, roll, pitch, yaw, t )

EP 1 060 772 B1

# F I G. 19

REFERENCE COORDINATE SYSTEM

$M_{head}$     $M_{hand}$

HEAD
COORDINATE
SYSTEM
( HEAD LOCATION /
POSTURE )

HAND
COORDINATE
SYSTEM
( HAND LOCATION /
POSTURE )

# F I G. 20

HEAD COORDINATE
SYSTEM
( HEAD LOCATION /
POSTURE )

$M^{-1}{}_{head}$

$M'_{hand}$

$M_{hand}$

REFERENCE COORDINATE
SYSTEM

HAND COORDINATE
SYSTEM
( HAND LOCATION /
POSTURE )

# F I G. 21

HEAD COORDINATE SYSTEM
( VIEWED FROM TOP )

FRONT

UP = +y

LEFT

RIGHT

+ x

BACK

+ z

# F I G. 22

HAND COORDINATE SYSTEM
( VIEWED FROM BACK OF HAND )

THUMB

LITTLE FINGER

+ x

BACK SIDE = +y

+ z

# F I G. 23

ACTION ANALYSIS

PRIMARY INFORMATION GROUP

CURRENT DATA SET

HEAD LOCATION / POSTURE AND MEASURED TIME

HAND LOCATION / POSTURE AND MEASURED TIME

PREVIOUS DATA SET

DATA SET BEFORE PREVIOUS DATA SET

2001a

HEAD LOCATION / POSTURE MEASUREMENT

HAND LOCATION / POSTURE MEASUREMENT

2001b

GENERATE SECONDARY INFORMATION :
· HAND LOCATION / POSTURE WITH REFERENCE TO HEAD
· HAND VELOCITY
· HAND ACCELERATION

2002

STATE TRANSITION CONDITION DETERMINATION PROCESS

OUTPUT ACTION ANALYSIS RESULT
· ACTION STATE $\psi$
· THREE-DEMENSIONAL INFORMATION OF HEAD AND HAND

COMMAND SIGNAL CONVERSION

EP 1 060 772 B1

# F I G. 24

```
                 ┌─────────────┐
                 │    START    │
                 └──────┬──────┘
                        ▼
```

| INPUT LOCATION / POSTURE SIGNALS OF HEAD AND HAND FROM SENSORS 100 AND 200 | ~ S2 |

| COMPUTE HAND LOCATION AND POSTURE ( L'hand AND P'hand ) WITH REFERENCE TO HEAD | ~ S3 |

| COMPUTE VECTORS OF VELOCITY Vhand AND ACCELERATION Ahand OF CHANGE IN LOCATION OF HAND | ~ S4 |

| CHECK STATE TRANSITION CONDITION | ~ S5 |

| TRANSIT STATE | ~ S6 |

| OUTPUT CURRENT STATE, TIME ELAPSED FROM PREVIOUS STATE TRANSITION, AND CURRENT LOCATIONS / POSTURES OF HAND AND HEAD | ~ S7 |

```
                 ┌─────────────┐
                 │     END     │
                 └─────────────┘
```

# F I G. 25

LOADING
STATE

OPERATION
GUIDANCE STATE

INITIAL
STATE

FIRING
STATE

AUTOMATICALLY TRANSMIT
AFTER ELAPSE OF
PREDETERMINED TIME

DEFENSE
STATE

# F I G. 26

```
                    ┌─────────────┐
                    │    ENTER    │
                    └─────────────┘
                          │
                          │    BRANCH ACCORDING TO
                          │    CURRENT STATE NUMBER

 S100       S200       S300       S400       S500
   │          │          │          │          │
   ▼          ▼          ▼          ▼          ▼
┌──────┐  ┌──────┐   ┌──────┐   ┌──────┐   ┌──────┐
│ # 0  │  │ # 1  │   │ # 2  │   │ # 4  │   │ # 5  │
│(FIG27)│  │(FIG28)│  │(FIG29)│  │(FIG30)│  │(FIG31)│
└──────┘  └──────┘   └──────┘   └──────┘   └──────┘
              │          │          │
              ▼          ▼◄─        ▼
                    ┌─────────────┐
                    │    EXIT     │
                    └─────────────┘
```

EP 1 060 772 B1

# F I G. 27

Flowchart:

ENTER

S102: $Z_{hand} > C_{01}$ ? — NO →
  YES ↓

S104: $\alpha 1 < C_{02}$ ? — NO →
  YES ↓

S106: GENERATE STATE TRANSITION 0→1
• SAVE TIME $t_{01} = t$
  ↓

S108: SAVE HAND LOCATION $L_{01} = L_{hand}$
  ↓

S110: OUTPUT ACTION STATE 1 ( LOADING STATE )

S112: $\alpha 2 > C_{03}$ ? — NO →
  YES ↓

S114: GENERATE STATE TRANSITION 0→3
• SAVE TIME $t_{03} = t$
  ↓

S116: OUTPUT ACTION STATE 3 ( DEFENSE STATE )

S118: $\alpha 2 > C_{04}$ ? — NO →
  YES ↓

S120: GENERATE STATE TRANSITION 0→4
• SAVE TIME $t_{04} = t$
  ↓

S122: OUTPUT ACTION STATE 4 ( OPERATION GUIDANCE STATE )

S124: OUTPUT ACTION STATE 0 ( NO ACTION )

EXIT

49

# F I G. 28

# F I G. 29

```
                    ┌─────────────┐
                    │    ENTER    │
                    └─────────────┘
                           │
         S302              ▼
                    ╱─────────────╲         NO
                   ╱   Δt > T2 ?    ╲──────────────┐
                    ╲─────────────╱               │
                           │                      │
         S304              │ YES                  │
                           ▼                      │
              ┌───────────────────────┐          │
              │   GENERATE STATE      │          │
              │   TRANSITION 2→0      │          │
              │          •            │          │
              │   SAVE TIME t20 = t   │          │
              └───────────────────────┘          │
                                                 │
       S306          │           S308            │
                     ▼                           ▼
          ┌─────────────────┐        ┌─────────────────┐
          │  OUTPUT ACTION  │        │  OUTPUT ACTION  │
          │     STATE 0     │        │     STATE 2     │
          │  ( NO ACTION )  │        │ ( FIRING STATE )│
          └─────────────────┘        └─────────────────┘
                     │                         │
                     ▼◄────────────────────────┘
                    ┌─────────────┐
                    │    EXIT     │
                    └─────────────┘
```

# F I G. 30

```
                    ┌──────────────┐
                    │    ENTER     │
                    └──────┬───────┘
                           │
        S402               ▼
              ╱◇◇◇◇◇◇◇◇◇◇◇◇◇◇◇◇╲    NO
             ◇   α2 < C31 ?      ◇─────────────┐
              ╲◇◇◇◇◇◇◇◇◇◇◇◇◇◇◇◇╱               │
                     │                          │
                     │ YES          S407        ▼
                     │                   ╱◇◇◇◇◇◇◇◇◇◇◇◇◇◇╲   NO
                     │                  ◇   Δt > T3 ?    ◇───────┐
                     │                   ╲◇◇◇◇◇◇◇◇◇◇◇◇◇◇╱        │
                     │                          │ YES            │
        S404         │◄─────────────────────────┘                │
              ┌──────┴────────────┐                              │
              │  GENERATE STATE    │                             │
              │  TRANSITION 3→0    │                             │
              │         •          │                             │
              │  SAVE TIME t30 = t │                             │
              └──────┬─────────────┘                             │
        S406         │                         S408              │
              ┌──────┴────────────┐       ┌────────────────────┐│
              │  OUTPUT ACTION     │       │  OUTPUT ACTION     ││
              │    STATE 0         │       │    STATE 3         ││
              │  ( NO ACTION )     │       │  ( DEFENSE STATE ) ││
              └──────┬─────────────┘       └─────────┬──────────┘
                     │                               │
                     │◄──────────────────────────────┘
                     ▼
              ┌──────────────┐
              │     EXIT     │
              └──────────────┘
```

52

# F I G. 31

ENTER

S500

$\alpha 2 > C_{41}$ ? —— NO

YES

S506

$\Delta t < T_4$ ? —— NO

YES

S502

GENERATE STATE
TRANSITION 0→4
•
SAVE TIME $t_{04} = t$

S504

OUTPUT ACTION
STATE 0
( NO ACTION )

S508

OUTPUT ACTION
STATE 4
( OPERATION
GUIDANCE STATE )

EXIT

# F I G. 32

# FIG. 33

# F I G. 34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11084307 A
- EP 0889690 A2
- US 5558619 A
- JP 7333551 A

### Non-patent literature cited in the description

- AR2 Hockey: A Case Study of Collaborative Augmented Reality. **T. Ohshima et al.** Proceedings of the IEEE Virtual Reality Annual International Symposium (VRAIS'98). 14 March 1998, 268-275